# EUROPEAN PATENT APPLICATION

(11) **EP 3 674 011 A1**
(43) Date of publication of application: **01.07.2020**
(21) Application number: 19218998.3
(22) Date of filing: 20.12.2019
(51) Int. Cl.: B21J 15/14, B21J 15/42, B25J 9/00, B25J 15/06, B64F 5/10

(54) **HIGH-DENSITY ROBOTIC SYSTEM**

(30) Priority: 21.12.2018 US 201816230441; 21.12.2018 US 201816230522; 08.02.2019 NL 2022547
(71) Applicant: The Boeing Company, Chicago, IL 60606-1596 (US)
(72) Inventor: OBEROI, Harinder S., Chicago, IL Illinois 60606-1596 (US); BARRICK, Kevin Marion, Chicago, IL Illinois 60606-1596 (US); HU, Charles Yuanxin, Chicago, IL Illinois 60606-1596 (US)
(74) Representative: Duxbury, Stephen

(57) **Abstract**

Methods and apparatuses for performing automated operations, such as installing fasteners at a plurality of locations along a joint, using a high-density robotic cell. A plurality of different tasks for a fastener installation operation is performed concurrently at selected locations of the plurality of locations using a plurality of single function end effectors positioned relative to the selected locations in a high-density setup.

## Description

### FIELD

This disclosure generally relates to the assembly of parts and, more particularly, to methods and apparatuses for performing multiple operations using a high-density robotic cell that includes multiple single function end effectors.

### BACKGROUND

Automating certain operations during the assembly of structures may increase assembly accuracy, improve assembly efficiency, and reduce overall assembly. For example, the tasks involved in the joining of two parts may be automated. These tasks may include clamping together the two parts, drilling holes through the two parts, inspecting the drilled holes, and inserting fasteners through the drilled holes.

Currently, some fastener installation operations are automated using robots with multifunction end effectors. A multifunction end effector may be a machine with multiple moving parts that work together to perform the various tasks involved in fastener installation, including clamping, drilling, inspection, and fastener insertion. One or more of these tasks may require that parts be held in place together *(e.g.,* clamped up) in order for a fastener to be installed through the parts. Some currently available systems for maintaining the clamp-up of parts may be more complex and less efficient than desired for performing certain types of assembly operations.

Further, some currently available systems robotic systems and end effectors are larger in size, scale, and complexity, and thus require more volumetric space and maintenance than desired. Accordingly, a lower density of robotic devices than desired may be positioned near each other within a small volumetric space, which may limit the number of operations that can be performed concurrently. Further, the down time required for routine maintenance or repair of multifunction end effectors may be greater than desired, which may, in turn, slow down production rates more than desired. In some cases, the lower density of robotic devices that can be used may result in greater takt times and lower production efficiencies than desired.

### SUMMARY

In another example embodiment, a high-density robotic system comprises a first plurality of robotic devices; a second plurality of robotic devices; a first platform; and a second platform. Each of the first plurality of robotic devices is capable of providing a single-sided clamp-up. The second plurality of robotic devices includes a first robotic device coupled to a drilling end effector; a second robotic device coupled to an inspection end effector; and a third robotic device coupled to a fastener insertion end effector. The first platform supports the first plurality of robotic devices, the first platform being sized to fit and move within an interior of a fuselage assembly. The second platform supports the second plurality of robotic devices, the second platform being sized for positioning and movement along an exterior of the fuselage assembly.

In another example embodiment, a method is provided for performing automated fastener installation operations along a fuselage assembly for an aircraft. A first platform supporting a first plurality of robotic devices of a robotic cell is positioned within an interior of a fuselage assembly relative to a selected section of the fuselage assembly. A second platform supporting a second plurality of robotic devices of the robotic cell is positioned along an exterior of the fuselage assembly relative to the selected section of the fuselage assembly. Automated fastener installation operations are performed at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points.

In another example embodiment, a method is provided for performing automated operations using a high-density robotic cell. A plurality of different tasks is performed at each location of a plurality of locations along an assembly according to a predetermined task sequence using a plurality of robotic devices. The plurality of robotic devices is used to perform at least two of the plurality of different tasks for at least two different locations of the plurality of locations concurrently within a high-density robotic zone, during at least one stage in the predetermined task sequence.

In another example embodiment, a method is provided for installing fasteners at a plurality of locations along a joint. A plurality of different tasks for a fastener installation operation is performed concurrently at selected locations of the plurality of locations using a plurality of single function end effectors positioned relative to the selected locations in a high-density setup.

In another example embodiment, a method is provided for providing multiple single-sided clamp-ups. A two-sided clamp-up is established at a first fastener installation point using a first robotic device at a first side of a joint and a second robotic device at a second side of the joint. The two-sided clamp-up at the first fastener installation point is converted to a single-sided clamp-up using the first robotic device. The second robotic device is moved along the second side of the joint to a second fastener installation point, while maintaining the single-sided clamp-up at the first fastener installation point. A third robotic device is moved along the second side of the joint to the first fastener installation point, while maintaining the single-sided clamp-up at the first fastener installation point.

In another example embodiment, a method is provided for installing fasteners on a splice. A sequence of operations to be performed by a plurality of cells on the splice is determined. The sequence of operations is performed on the splice using the plurality of cells, each cell of the plurality of cells including a first plurality of robotic devices located in a first high-density robotic zone at a first side of the splice and a second plurality of robotic devices located in a second high-density robotic zone at a second side of the splice.

The disclosure also includes the following paragraphs:
1. A high-density robotic system comprising:
   a first plurality of robotic devices, each of the first plurality of robotic devices being capable of providing a single-sided clamp-up;
   a second plurality of robotic devices, the second plurality of robotic devices including:
      a first robotic device coupled to a drilling end effector;
      a second robotic device coupled to an inspection end effector; and
      a third robotic device coupled to a fastener insertion end effector;
      a first platform that supports the first plurality of robotic devices, the first platform being sized to fit and move within an interior of a fuselage assembly; and
      a second platform that supports the second plurality of robotic devices, the second platform being sized for positioning and movement along an exterior of the fuselage assembly.
2. The high-density robotic system of paragraph 1, wherein the second platform is coupled to an automated guided vehicle to allow the second platform to be moved relative to the exterior of the fuselage assembly.
3. The high-density robotic system of paragraph 1, further comprising:
   a control system for controlling the first plurality of robotic devices and the second plurality of robotic devices to perform an automated operation at each of a plurality of locations on the fuselage assembly concurrently and for controlling interchanging of the second plurality of robotic devices to perform different tasks of the automated operation according to a predetermined task sequence.
4. A method for building the fuselage assembly of an aircraft using the system of paragraph 1.
5. A method for performing automated fastener installation operations along a fuselage assembly for an aircraft, the method comprising:
   positioning a first platform supporting a first plurality of robotic devices of a robotic cell within an interior of a fuselage assembly relative to a selected section of the fuselage assembly;
   positioning a second platform supporting a second plurality of robotic devices of the robotic cell along an exterior of the fuselage assembly relative to the selected section of the fuselage assembly; and
   performing automated fastener installation operations at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points.
6. A method for performing automated operations using a high-density robotic cell, the method comprising:
   performing a plurality of different tasks at each location of a plurality of locations along an assembly according to a predetermined task sequence using a plurality of robotic devices, the plurality of robotic devices being used to perform at least two of the plurality of different tasks for at least two different locations of the plurality of locations concurrently within a high-density robotic zone, during at least one stage in the predetermined task sequence.
7. The method of paragraph 6, wherein performing the plurality of tasks comprises:
   performing, concurrently, a drilling task at a first location using a drilling end effector coupled to a first robotic device and an inspection task at a second
   location of the plurality of locations using an inspection end effector coupled to a second robotic device, the first robotic device and the second robotic device being positioned in a high-density setup while performing the drilling task and the inspection task.
8. The method of paragraph 6, wherein performing the plurality of tasks comprises:
   performing, concurrently, a drilling task at a first location using a drilling end effector coupled to a first robotic device and a fastener insertion task at a second location of the plurality of locations using a fastener insertion end effector coupled to a second robotic device, the first robotic device and the second robotic being positioned in a high-density setup while performing the drilling task sand the fastener insertion task.
9. The method of paragraph 6, wherein performing the plurality of tasks comprises:
   providing, concurrently, multiple single-sided clamp-ups from a first side of the assembly while the plurality of tasks is performed at a second side of the assembly.
10. The method of paragraph 6, wherein performing the plurality of tasks comprises:
   performing three different tasks at each of three different locations along the assembly according to the predetermined task sequence using the plurality of robotic devices, the plurality of robotic devices being used to perform a different one of the three different tasks concurrently at the three different locations during at least two stages in the predetermined task sequence.
11. The method of paragraph 6, wherein performing the plurality of tasks comprises:
   performing two different tasks at each of two different locations along the assembly according to the predetermined task sequence using the plurality of robotic devices, the plurality of robotic devices being used to perform a different one of the two different tasks concurrently at the two different locations during at least two stages in the predetermined task sequence.
12. A method of installing fasteners at a plurality of locations along a joint, the method comprising:
   performing a plurality of different tasks for a fastener installation operation concurrently at selected locations of the plurality of locations using a plurality of single function end effectors positioned relative to the selected locations in a high-density setup.
13. The method of paragraph 12, wherein the selected locations are non-adjacent.
14. The method of paragraph 12, wherein the plurality of different tasks includes a drilling task for drilling a hole, an inspection task for inspecting the hole, and a fastener insertion task for installing a fastener in the hole.
15. The method of paragraph 12, wherein performing the plurality of different tasks comprises:
   performing the plurality of different tasks at every nth location of the plurality of locations, wherein every nth location is selected from one of every third, every fourth, and every fifth location.
16. The method of paragraph 12, wherein the selected locations are spaced apart horizontally by at least two locations of the plurality of locations.
17. The method of paragraph 12, wherein the selected locations are spaced apart vertically.
18. The method of paragraph 12, wherein performing the plurality of different tasks comprises:
   performing a clamp-up sequence at a first selected location of the selected locations;
   providing a single-sided clamp-up at a second selected location of the selected locations at a first side of the joint;
   performing, concurrently with the clamp-up sequence, an inspection task at the second selected location at a second side of the joint.
19. The method of paragraph 12, wherein performing the plurality of different tasks comprises:
   performing an inspection task at a first selected location of the selected locations;
   maintaining a single-sided clamp-up at a second selected location of the selected locations at a second side of the joint;
   performing, concurrently with the inspection sequence, a fastener insertion task at the second selected location at the second side of the joint.
20. A method for providing multiple single-sided clamp-ups, the method comprising:
   establishing a two-sided clamp-up at a first fastener installation point using a first robotic device at a first side of a joint and a second robotic device at a second side of the joint;
   converting the two-sided clamp-up at the first fastener installation point to a single-sided clamp-up using the first robotic device;
   moving the second robotic device along the second side of the joint to a second fastener installation point, while maintaining the single-sided clamp-up at the first fastener installation point; and
   moving a third robotic device along the second side of the joint to the first fastener installation point, while maintaining the single-sided clamp-up at the first fastener installation point.
21. The method of paragraph 20, further comprising:
   establishing the two-sided clamp-up at the second fastener installation point using a fourth robotic device at the first side of the joint and the second robotic device at the second side of the joint; and
   converting the two-sided clamp-up at the second fastener installation point to the single-sided clamp-up using the fourth robotic device.
22. The method of paragraph 21, further comprising:
   moving the second robotic device away from the second fastener installation point, while maintaining the single-sided clamp-up at the second fastener installation point; and
   moving the third robotic device along the second side of the joint to the second fastener installation point, while maintaining the single-sided clamp-up at the second fastener installation point.
23. A method of installing fasteners on a splice, the method comprising:
   determining a sequence of operations to be performed by a plurality of cells on the splice; and
   performing the sequence of operations on the splice using the plurality of cells, each cell of the plurality of cells including a first plurality of robotic devices located in a first high-density robotic zone at a first side of the splice and a second plurality of robotic devices located in a second high-density robotic zone at a second side of the splice.
24. The method of paragraph 23, wherein a first cell of the plurality of cells performs a fastener installation operation at every nth location along a length of the splice and a second cell of the plurality of cells performs the fastener installation operation at every mth location along the length of the splice.
25. The method of paragraph 24, wherein the first cell begins performing fastener installation operations at a first location along the splice and wherein the second cell begins performing fastener installation operations at a second location along the spice after a period of time has passed.
26. The method of paragraph 23, wherein the first plurality of robotic devices and the second plurality of robotic devices of a first cell in the plurality of cells perform all fastener installation operations for one section along the splice and wherein the first plurality of robotic devices and the second plurality of robotic devices of a second cell in the plurality of cells perform all fastener installation operations for a different section along the splice.

The disclosure also includes the following clauses:
1. A high-density robotic system comprising:
   a first plurality of robotic devices, each of the first plurality of robotic devices being capable of providing a single-sided clamp-up;
   a second plurality of robotic devices, the second plurality of robotic devices including:
      a first robotic device coupled to a drilling end effector;
      a second robotic device coupled to an inspection end effector; and
      a third robotic device coupled to a fastener insertion end effector;
   a first platform that supports the first plurality of robotic devices, the first platform being sized to fit and move within an interior of a fuselage assembly; and
   a second platform that supports the second plurality of robotic devices, the second platform being sized for positioning and movement along an exterior of the fuselage assembly.
2. The high-density robotic system of clause 1, wherein the second platform is coupled to an automated guided vehicle to allow the second platform to be moved relative to the exterior of the fuselage assembly.
3. The high-density robotic system of clause 1 or 2 , further comprising:
   a control system for controlling the first plurality of robotic devices and the second plurality of robotic devices to perform an automated operation at each of a plurality of locations on the fuselage assembly concurrently and for controlling interchanging of the second plurality of robotic devices to perform different tasks of the automated operation according to a predetermined task sequence.
4. A method for performing automated operations using a high-density robotic cell according to any of the preceding clauses, the method comprising:
   performing a plurality of different tasks at each location of a plurality of locations along an assembly according to a predetermined task sequence using a plurality of robotic devices, the plurality of robotic devices being used to perform at least two of the plurality of different tasks for at least two different locations of the plurality of locations concurrently within a high-density robotic zone, during at least one stage in the predetermined task sequence.
5. The method of clause 4, wherein performing the plurality of tasks comprises:
   performing, concurrently, a drilling task at a first location using a drilling end effector coupled to a first robotic device and an inspection, and/or a fastener insertion, task at a second location of the plurality of locations using an inspection end effector and/or a fastener insertion end effector coupled to a second robotic device, the first robotic device and the second robotic device being positioned in a high-density setup while performing the drilling task and the inspection, and/or fastener insertion, task.
6. The method of clause 4 or 5, wherein performing the plurality of tasks comprises:
   providing, concurrently, multiple single-sided clamp-ups from a first side of the assembly while the plurality of tasks is performed at a second side of the assembly.
7. The method of any of the clauses 4-6 wherein performing the plurality of tasks comprises:
   performing three different tasks at each of three different locations along the assembly according to the predetermined task sequence using the plurality of robotic devices, the plurality of robotic devices being used to perform a different one of the three different tasks concurrently at the three different locations during at least two stages in the predetermined task sequence.
8. The method of any of the clauses 4-6 wherein performing the plurality of tasks comprises:
   performing two different tasks at each of two different locations along the assembly according to the predetermined task sequence using the plurality of robotic devices, the plurality of robotic devices being used to perform a different one of the two different tasks concurrently at the two different locations during at least two stages in the predetermined task sequence.
9. A method of installing fasteners at a plurality of locations along a joint, the method comprising:
   performing a plurality of different tasks for a fastener installation operation concurrently at selected locations of the plurality of locations using a plurality of single function end effectors positioned relative to the selected locations in a high-density setup.
10. The method of clause 9, wherein the selected locations are non-adjacent.
11. The method of clause 9 or 10, wherein the plurality of different tasks includes a drilling task for drilling a hole, an inspection task for inspecting the hole, and a fastener insertion task for installing a fastener in the hole.
12. The method of any of the clauses 9- 11 wherein performing the plurality of different tasks comprises:
   performing the plurality of different tasks at every n^{th} location of the plurality of locations, wherein every n^{th} location is selected from one of every third, every fourth, and every fifth location.
13. The method of any of the preceding clauses 9-12 wherein the selected locations are spaced apart horizontally by at least two locations of the plurality of locations, or wherein the selected locations are spaced apart vertically.
14. The method of any of the preceding clauses 9-13 wherein performing the plurality of different tasks comprises:
   performing a clamp-up sequence at a first selected location of the selected locations;
   providing a single-sided clamp-up at a second selected location of the selected locations at a first side of the joint;
   performing, concurrently with the clamp-up sequence, an inspection task at the second selected location at a second side of the joint.
15. The method of any of the preceding clauses 9-14 wherein performing the plurality of different tasks comprises:
   performing an inspection task at a first selected location of the selected locations;
   maintaining a single-sided clamp-up at a second selected location of the selected locations at a second side of the joint;
   performing, concurrently with the inspection sequence, a fastener insertion task at the second selected location at the second side of the joint.
16. A method for providing multiple single-sided clamp-ups, the method comprising:
   establishing a two-sided clamp-up at a first fastener installation point using a first robotic device at a first side of a joint and a second robotic device at a second side of the joint;
   converting the two-sided clamp-up at the first fastener installation point to a single-sided clamp-up using the first robotic device;
   moving the second robotic device along the second side of the joint to a second fastener installation point, while maintaining the single-sided clamp-up at the first fastener installation point; and
   moving a third robotic device along the second side of the joint to the first fastener installation point, while maintaining the single-sided clamp-up at the first fastener installation point.
17. The method of clause 16, further comprising:
   establishing the two-sided clamp-up at the second fastener installation point using a fourth robotic device at the first side of the joint and the second robotic device at the second side of the joint; and
   converting the two-sided clamp-up at the second fastener installation point to the single-sided clamp-up using the fourth robotic device.
18. The method of clause 16 or 17, further comprising:
   moving the second robotic device away from the second fastener installation point, while maintaining the single-sided clamp-up at the second fastener installation point; and
   moving the third robotic device along the second side of the joint to the second fastener installation point, while maintaining the single-sided clamp-up at the second fastener installation point.
19. A method of installing fasteners on a splice, the method comprising:
   determining a sequence of operations to be performed by a plurality of cells on the splice; and
   performing the sequence of operations on the splice using the plurality of cells, each cell of the plurality of cells including a first plurality of robotic devices located in a first high-density robotic zone at a first side of the splice and a second plurality of robotic devices located in a second high-density robotic zone at a second side of the splice.
20. The method of clause 19, wherein a first cell of the plurality of cells performs a fastener installation operation at every n^{th} location along a length of the splice and a second cell of the plurality of cells performs the fastener installation operation at every m^{th} location along the length of the splice.
21. The method of clause 20, wherein the first cell begins performing fastener installation operations at a first location along the splice and wherein the second cell begins performing fastener installation operations at a second location along the spice after a period of time has passed.
22. The method of clause 19, wherein the first plurality of robotic devices and the second plurality of robotic devices of a first cell in the plurality of cells perform all fastener installation operations for one section along the splice and wherein the first plurality of robotic devices and the second plurality of robotic devices of a second cell in the plurality of cells perform all fastener installation operations for a different section along the splice.
23. A method for performing automated fastener installation operations along a fuselage assembly for an aircraft, the method comprising:
   positioning a first platform supporting a first plurality of robotic devices of a robotic cell within an interior of a fuselage assembly relative to a selected section of the fuselage assembly;
   positioning a second platform supporting a second plurality of robotic devices of the robotic cell along an exterior of the fuselage assembly relative to the selected section of the fuselage assembly; and
   performing automated fastener installation operations at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the example embodiments are set forth in the appended claims. The example embodiments, however, as well as a preferred mode of use, further objectives and features thereof, will best be understood by reference to the following detailed description of an example embodiment of the present disclosure when read in conjunction with the accompanying drawings.
**Figure** 1 is an illustration of a perspective view of manufacturing environment **100** in accordance with an example embodiment.
**Figure 2** is an illustration of an end view of the fuselage assembly from **Figure 1** being built in accordance with an example embodiment.
**Figure 3** is a block diagram of a manufacturing environment in accordance with an example embodiment.
**Figure 4** is an illustration of a side view of robotic devices with single function end effectors positioned relative to an assembly in accordance with an example embodiment.
**Figure 5** is an illustration of an enlarged side view of end effectors from **Figure 4** positioned relative to the lap splice from **Figure 4** in accordance with an example embodiment.
**Figure 6** is an illustration of a side view of the end effectors from **Figure 4** applying forces to the lap splice from **Figure 4** in accordance with an example embodiment.
**Figure 7** is an illustration of a side view of a drilling operation in accordance with an example embodiment.
**Figure 8** is an illustration of a side view of a suctioning operation in accordance with an example embodiment.
**Figure 9** is an illustration of an enlarged cross-sectional side view of the parts from **Figure 8** in accordance with an example embodiment.
**Figure 10** is an illustration of an enlarged side view of a single-sided clamp-up in accordance with an example embodiment.
**Figure 11** is an illustration of another side view of the single-sided clamp-up from **Figure 10** in accordance with an example embodiment.
**Figure 12** is an illustration of a perspective view of an end effector positioned relative to a second side of the lap splice from **Figure 11** in accordance with an example embodiment.
**Figure 13** is an illustration of a side view of a fastener insertion tool being used to insert the fastener (shown in **Figures 11** and **12**) into the fastener hole (shown in **Figure 11**) in accordance with an example embodiment.
**Figure 14** is an illustration of a cross-sectional view of the installed fastener in the lap splice in accordance with an example embodiment.
**Figure 15** is an illustration of a completion of the fastener installation operation in accordance with an example embodiment.
**Figure 16** is a flowchart of a method for performing a fastener installation in accordance with an example embodiment.
**Figure 17** is a flowchart of a process for maintaining a clamp-up in accordance with an example embodiment.
**Figure 18** is a flowchart of a process for maintaining a clamp-up in accordance with an example embodiment.
**Figure 19** is a flowchart of a process for maintaining a single-sided clamp-up in accordance with an example embodiment.
**Figure 20** is a flowchart of a process for maintaining a single-sided clamp-up in accordance with an example embodiment.
**Figure 21** is a flowchart of a process for maintaining a single-sided clamp-up in accordance with an example embodiment.
**Figure 22** is a flowchart of a process for maintaining a single-sided clamp-up in accordance with an example embodiment.
**Figure 23** is a flowchart of a process for providing a clamp-up in accordance with an example embodiment.
**Figure 24** is a block diagram of a manufacturing environment in accordance with an example embodiment.
**Figure 25** is an illustration of another perspective view of the manufacturing environment from **Figure 1** in accordance with an example embodiment.
**Figure 26** is an illustration of an enlarged end view of a fuselage assembly being built in accordance with an example embodiment.
**Figure 27** is an illustration of an enlarged perspective view of end effectors coupled to robotic devices from **Figures 25-26** in accordance with an example embodiment.
**Figure 28** is an illustration of an enlarged perspective view of end effectors coupled to robotic devices from **Figures 25-26** in accordance with an example embodiment.
**Figure 29** is a representational sequence diagram of the various stages involved in a cell performing automated fastener installation operations at multiple fastener installation points along an assembly in accordance with an example embodiment.
**Figure 30** is a flowchart of a process for performing automated operations for an assembly in accordance with an example embodiment.
**Figure 31** is a flowchart of a process for performing automated operations to build a fuselage assembly for an aircraft in accordance with an example embodiment.
**Figure 32** is a flowchart of a process for performing automated fastener installation operations along a joint in accordance with an example embodiment.
**Figure 33** is a flowchart of a process for performing automated fastener installation operations along a fuselage assembly for an aircraft in accordance with an example embodiment.
**Figure 34** is a flowchart of a process for performing automated operations using a high-density robotic cell in accordance with an example embodiment.
**Figure 35** is a flowchart of a process for installing fasteners at a plurality of locations along a joint in accordance with an example embodiment.
**Figure 36** is a flowchart of a process for providing multiple single-sided clamp-ups in accordance with an example embodiment.

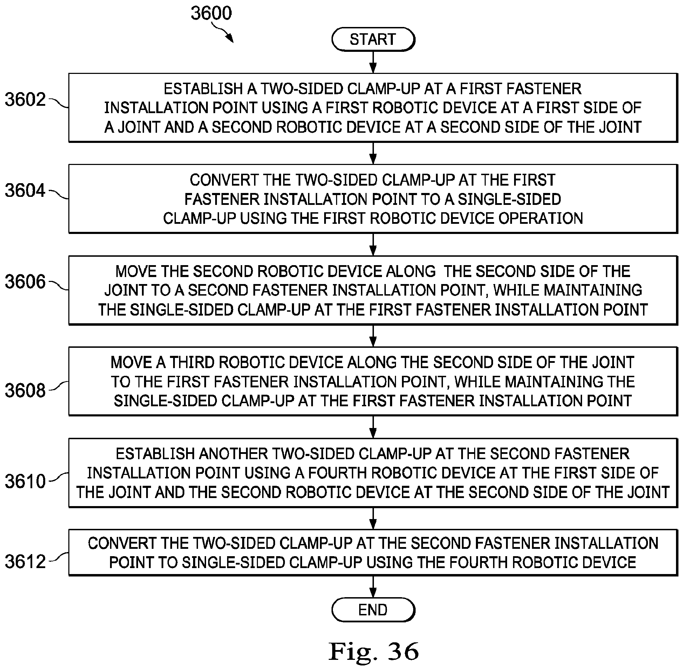

**Figure 36** is a flowchart of a process for installing fasteners on a splice in accordance with an example embodiment.

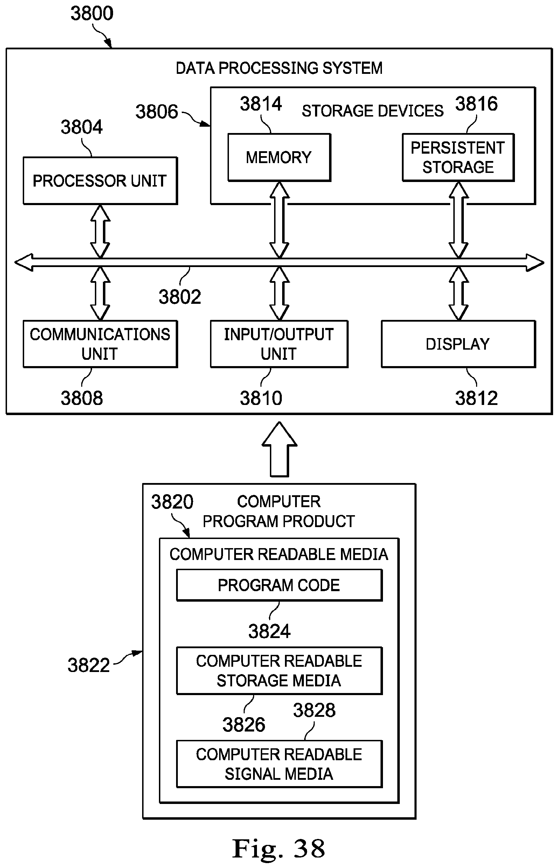

**Figure 38** is a block diagram of a data processing system in accordance with an example embodiment.

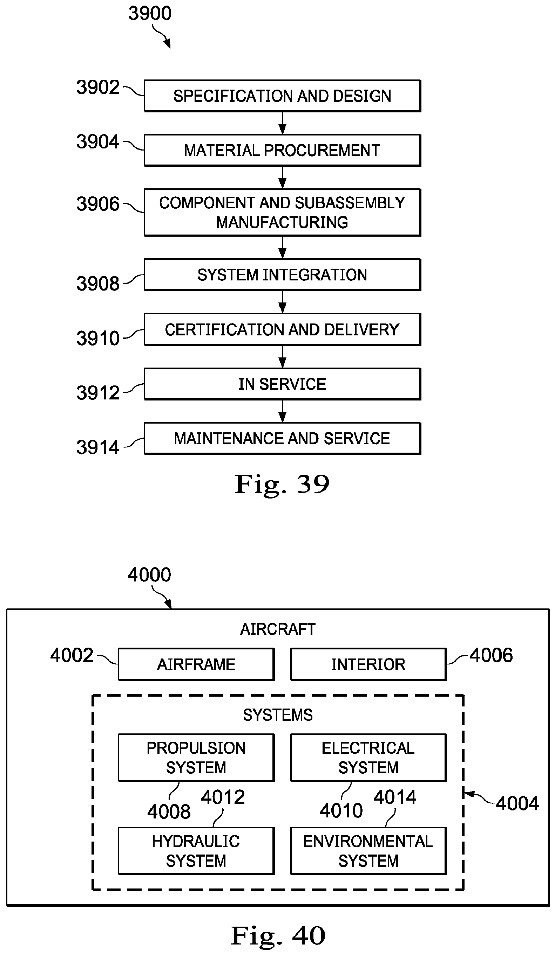

**Figure 39** is an illustration of an aircraft manufacturing and service method in accordance with an example embodiment.
**Figure 40** is a block diagram of an aircraft in accordance with an example embodiment.

### DETAILED DESCRIPTION

The example embodiments described below provide methods and apparatuses for improving the efficiency and ease of joining parts together. For example, the methods and apparatuses described below may improve the efficiency and ease and reduce the complexity of installing fasteners to join parts together. The example embodiments recognize and take into account that single function end effectors allow the various tasks *(e.g.,* drilling, inspection, fastener insertion) of a fastener installation operation to be separated. By using a different single function end effector for the different tasks, the end effectors may be made smaller, lighter, and less complex than multifunction end effectors.

The simplicity of single function end effectors may help improve the overall efficiency and reliability of using end effectors to automate fastener installation operations. Further, the simplicity of single function end effectors may reduce the amount of maintenance required, the overall size of the supporting robot and associated structure, or both.

In particular, the example embodiments recognize and take into account that the parts of an assembly through which a fastener is being installed need to be held in place together (*e.g.,* clamped together) while the single function end effectors are being switched out to perform the various tasks. The example embodiments provide methods and apparatuses for holding these parts together from one side of the assembly to enable the switching out of single function end effectors on the other side of the assembly.

In one example embodiment, a method is provided for automating a fastener installation. A first mechanical force is applied to a first part and a second mechanical force is applied to a second part to form a clamp-up of the first part and the second part. Air is suctioned through a fastener hole, which is formed by a first hole in the first part that is aligned with a second hole in the second part, to pull the second part towards the first part and thereby maintain the clamp-up of the first part and the second part even after the second mechanical force has been removed.

In another example embodiment, method is provided for aligning a first hole in a first panel with a second hole in a second panel to define a through-hole. A wall that defines the second hole is gripped from within the through-hole to pull the second panel towards the first panel and thereby establish a clamp-up of the first panel and the second panel.

In yet another example embodiment, a method is provided for using a single function end effector to maintain a clamp-up. The single function end effector is positioned at one side of a panel joint and applies both a first force on a first panel of the panel joint and a second force on a second panel of the panel joint to maintain the clamp-up. The first force may be, for example, a suction force, while the second force may be, for example, a reactive force applied in response to the suction force. In this manner, a single-sided clamp-up is achieved.

Thus, the example embodiments provide methods and systems for establishing a clamp-up, maintaining a clamp-up, or both of a first panel and a second panel. These methods and systems involve gripping a wall that defines a hole in the second panel from within a hole in the first panel to pull the second panel towards the first panel. The first hole and the second hole form a through-hole extending through the first panel and the second panel.

This gripping may be performed by, for example, drawing a partial vacuum (*e.g.,* suctioning) through a fastener hole (*e.g.,* the through-hole) in a direction from the second panel towards the first panel. This gripping force is combined with an opposing force (*e.g.,* a reactive force) created by the single function end effector being positioned in contact with the first panel. In this manner, single-sided clamp-up is achieved. The clamp-up is formed from the side of the first panel to allow movement of tools and devices and provide space for any number of operations to be performed at the side of the second panel.

In some cases, one or more panels may be present between the first panel and the second panel. The fastener hole extends through the first panel, the second panel, and any number of panels between the first and second panels. In other cases, sealant is applied on the faying surfaces of one or both of the first and second panels.

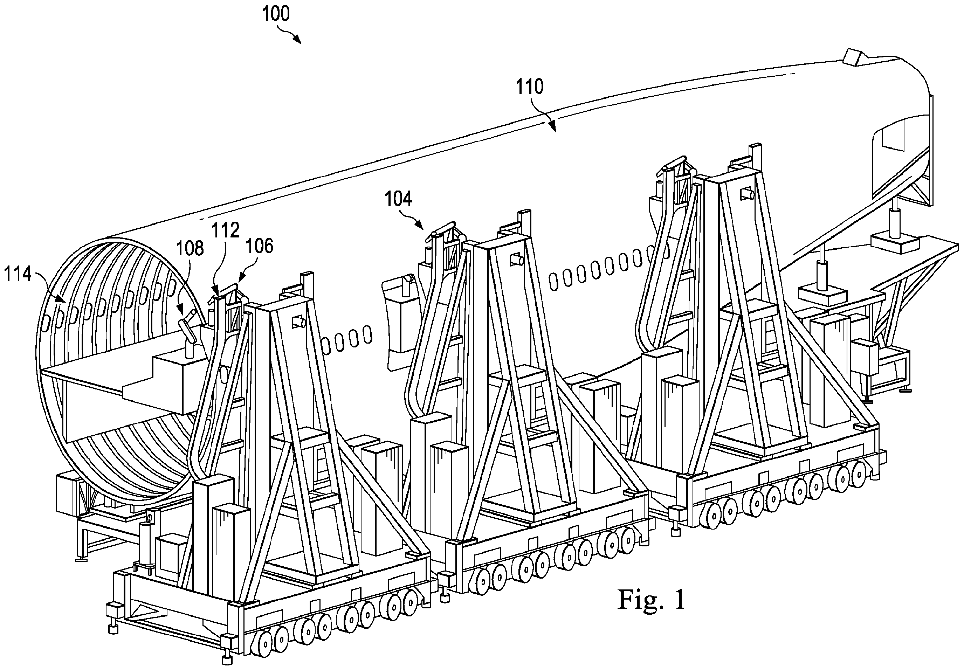

Referring now to the figures, **Figure 1** is an illustration of a perspective view of manufacturing environment **100** in accordance with an example embodiment. Within manufacturing environment **100,** fuselage assembly **102** is being built. In this illustrative example, plurality of assembly systems **104** is positioned relative to fuselage assembly **102.**

Assembly system **106** is an example of one of plurality of assembly systems **104.** Assembly system **106** includes robotic devices **108** positioned relative to exterior **110** of fuselage assembly **102** and robotic devices **112** positioned relative to interior **114** of fuselage assembly **102.** Robotic devices **108** and robotic devices **112** work together to perform fastener installation operations for the building of fuselage assembly **102.**

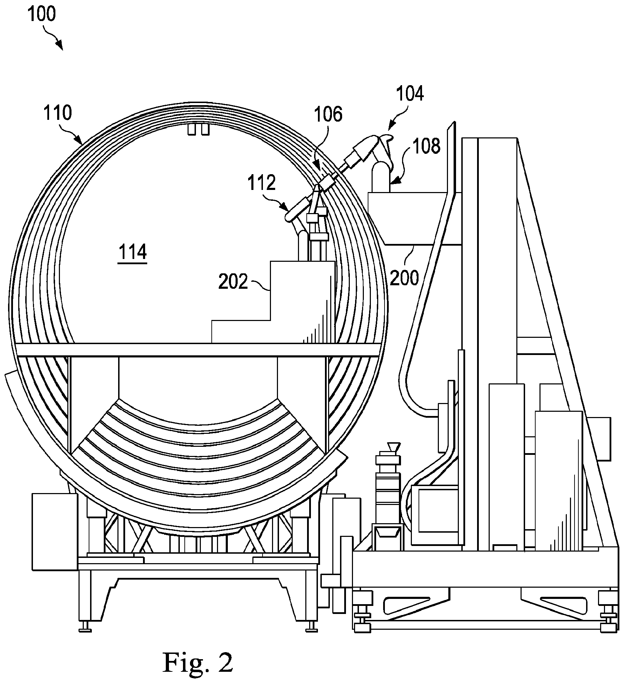

**Figure 2** is an illustration of an end view of fuselage assembly **102** being built in accordance with an example embodiment. As depicted, robotic devices **108** are supported by platform **200** and robotic devices **112** are supported by platform **202.** Robotic devices **108** and robotic devices **112** work together to install fasteners that join fuselage panels together to build fuselage assembly **102.**

In this illustrative example, robotic devices **108** are coupled with end effectors for performing drilling, inspection, and fastener insertion tasks. These end effectors are single function end effectors that may be switched out by being moved around relative to, for example, fastener installation point **113** to perform their individual tasks. A single function end effector is an end effector used to perform a single function per robotic device per fastener installation point. In some cases, robotic devices **108** are moved around on platform **200** in order to position the end effector for a particular task relative to fastener installation point **113.** In other cases, robotic devices **108** may remain stationary on platform **200** but may be used to move their end effectors around in order to position the proper end effector for a given task relative to fastener installation point **113.**

Each of robotic devices **112** is coupled with an end effector that is used to hold together the fuselage panels from the interior side of fuselage assembly **102** during the switching out of the single function end effectors coupled to robotic devices **108.** For example, after the end effector on one of robotic devices **108** has been used to perform its designated task, that end effector may be moved away from fastener installation point **113** to make room for a different end effector. An end effector coupled to one of robotic devices **112** is used to maintain the clamp-up of the fuselage panels from only the interior side of fuselage assembly **102,** while the end effectors are being switched around on the exterior side of fuselage assembly **102.**

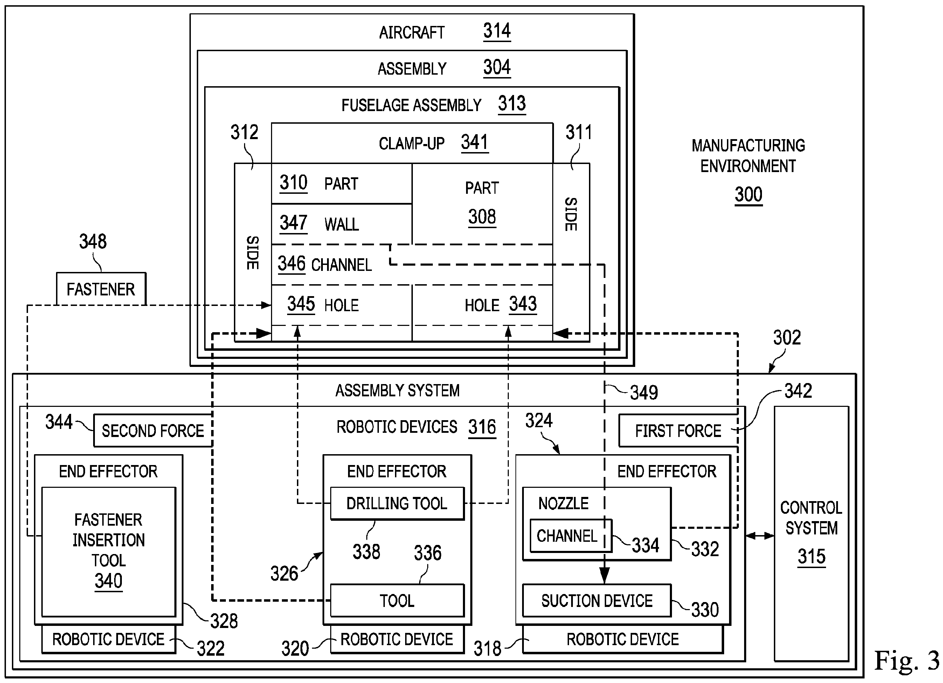

**Figure 3** is a block diagram of a manufacturing environment **300** in accordance with an example embodiment. Manufacturing environment **100** in **Figure 1** is an example of one implementation for manufacturing environment **300.** Within manufacturing environment **300,** assembly system **302** is used to build assembly **304.**

Assembly **304** includes part **308** and part **310.** Part **308** and part **310** are mated to form a joint (not shown) in assembly **304.** Side **311** of part **308,** which forms a first side of the joint, faces opposite part **310.** Side **312** of part **310,** which forms a second side of the joint, faces opposite part **308.**

Although assembly **304** is described as having only two parts in these example embodiments, in other cases, assembly **304** may include more than two parts. In one illustrative example, assembly **304** takes the form of fuselage assembly **313** of aircraft **314.** In one example, part **308** and part **310** take the form of fuselage panels. In other examples, part **308** and part **310** take the form of other types of aircraft parts, such as wing panels. When part **308** and part **310** take the form of panels, they together form a panel joint.

Assembly system **106** in **Figure 1** is an example of one implementation for assembly system **302.** Assembly system **302** includes control system **315** and plurality of robotic devices **316.** Control system **315** controls the operation of robotic devices **316.** Control system **315** is implemented using software, hardware, firmware, or a combination thereof.

When software is used, the operations performed by control system **315** may be implemented using, for example, without limitation, program code configured to run on a processor unit. When firmware is used, the operations performed by control system **315** may be implemented using, for example, without limitation, program code and data and stored in persistent memory to run on a processor unit.

When hardware is employed, the hardware may include one or more circuits that operate to perform the operations performed by control system **315.** Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In these illustrative examples, control system **315** may be implemented using a computer system. The computer system may include a single computer or multiple computers in communication with each other.

Plurality of robotic devices **316** includes, for example, without limitation, robotic device **318,** robotic device **320,** and robotic device **322.** Robotic device **318,** robotic device **320,** and robotic device **322** are coupled with end effector **324,** end effector **326,** and end effector **328,** respectively. Each of these end effectors may be considered a single function end effector. In some illustrative examples, end effector **324,** end effector **326,** and end effector **328** are considered part of robotic device **318,** robotic device **320,** and robotic device **322,** respectively. In other illustrative examples, end effector **324,** end effector **326,** and end effector **328** are considered separate from but attachable to and detachable from robotic device **318,** robotic device **320,** and robotic device **322.**

In one example embodiment, end effector **324** includes suction device **330** and a tool, which may be nozzle **332,** coupled to suction device **330.** Nozzle **332** is directly or indirectly coupled to suction device **330.** In these illustrative examples, nozzle **332** may be an elongated member with channel **334** that extends through nozzle **332.** Suction device **330** generates suction that with sufficient power, suctions air into and through channel **334** within nozzle **332.**

End effector **326** includes tool **336** and drilling tool **338.** In some illustrative examples, tool **336** is a cylindrical member that surrounds drilling tool **338.** End effector **328** includes fastener insertion tool **340.**

To perform a fastener installation, end effector **324** and end effector **326** are positioned on opposite sides of assembly **304.** These end effectors are used to apply equal and opposite forces (*e.g.*, first force **342** and second force **344** to part **308** and part **310,** respectively) to form clamp-up **341.** In particular, end effector **324** and end effector **326** are operated to apply equal and opposite forces to side **311** of part **308** and side **312** of part **310,** respectively, to form clamp-up **341.**

For example, at least one of robotic device **318** or end effector **324** is operated to apply first force **342** to side **311** of part **308** using nozzle **332.** First force **342** is a first mechanical force, which may also be referred to as a clamping force in some cases. In some cases, end effector **324** includes an extension system for moving nozzle **332** towards side **311** to apply first force **342** to part **308.** Further, at least one of robotic device **320** or end effector **326** may be operated to apply second force **344** to the other side of assembly **304** using tool **336.** Second force **344** is a second mechanical force, which may also be referred to as a clamping force in some cases. In some cases, end effector **326** includes an extension system for moving tool **336** towards side **312** to apply second force **344** to part **310.**

In one example, nozzle **332** and tool **336** are simultaneously extended towards and pressed against part **308** and part **310,** respectively, to apply first force **342** to part **308** and second force **344** to part **310.** Nozzle **332** and tool **336** are pressed against part **308** and part **310,** respectively, until the desired force static equilibrium is achieved between first force **342** and second force **344.** In other words, nozzle **332** and tool **336** are pressed or pushed against part **308** and part **310,** respectively, until first force **342** and second force **344,** which are equal and opposite forces, reach amounts sufficient to establish clamp-up **341** of part **308** and part **310.**

Once clamp-up **341** is achieved, nozzle **332** and tool **336** are held in fixed positions with respect to the reference coordinate system. Thus, clamp-up **341** is maintained in a fixed position relative to the reference coordinate system by the force static equilibrium created by the positioning of nozzle **332** and tool **336** with respect to the reference coordinate system.

In some illustrative examples, clamp-up **341** includes part **308,** part **310,** with both having sealant applied to the faying surfaces of these parts. In other words, the clamp-up may include the sealant sealing these parts together. This type of clamp-up **341** of part **308** and part **310** may be used for "one-up" assembly.

In some illustrative examples, drilling tool **338** is used to drill hole **343** through part **308** and hole **345** through part **310** while clamp-up **341** of these parts is maintained using suction **349.** Drilling tool **338** is positioned at side **312** such that the drilling of both hole **343** and hole **345** is performed from side **312.** In this manner, hole **345** is formed before hole **343.** In one or more examples, drilling tool **338** includes a suction device or some other type of cleanup device that is used to help remove part shavings or castoffs that are created during drilling.

Maintaining clamp-up **341** of these parts during drilling ensures that hole **343** and hole **345** are aligned during and after drilling to form fastener hole **346.** Further, maintaining clamp-up **341** of these parts during drilling may also help maintain clamp-up of a sealant (not shown) between part **308** and part **310;** prevent gaps between part **308** and part **310;** prevent drill filings, shavings, or castoffs from falling through or otherwise entering one or more gaps between part **308** and part **310;** reduce or eliminate a need to deburr edges of hole **343** and hole **345** after drilling; or a combination thereof.

Hole **343** in part **308** and hole **345** in part **310** are formed concentrically and coaxially. Fastener hole **346** may also be referred to as a channel or a through-hole. As used herein, a through-hole is a hole that passes through two or more parts and is thereby formed by the coaxial holes through these two or more parts.

Prior to installation of fastener **348** within fastener hole **346,** end effector **326** needs to be switched out for end effector **328** having fastener insertion tool **340.** But because tool **336** of end effector **326** is being used to maintain clamp-up **341,** a different mechanism for maintaining clamp-up **341** is needed before end effector **328** can be switched out. For example, movement of tool **336** away from part **310** or movement of nozzle **332** away from part **308,** without some additional mechanism for maintaining clamp-up **341,** could undo clamp-up **341.** Accordingly, a mechanism for maintaining clamp-up **341** while still allowing end effector **326** to be switched out with end effector **328** is needed.

Suction device **330** of end effector **324** is used to maintain clamp-up **341** from only side **311** to thereby allow end effector **326** at side **312** to be switched out with end effector **328.** In particular, suction device **330** generates suction **349** to suction air through fastener hole **346** from side **311.** Suctioning is performed while the force static equilibrium between first force **342** and second force **344** is maintained.

The volumetric flow rate of the suctioning is sufficient to pull part **310** towards part **308** to maintain clamp-up **341.** In particular, the volumetric flow rate is sufficient to provide a gripping force that grips wall **347** defining hole **345** to pull part **310** towards part **308.** In other illustrative examples, wall **347** may also be referred to as a hole wall. This suctioning is sufficient to independently maintain clamp-up **341** of part **308** and part **310** relative to each other.

By using the suctioning to grip wall **347** that defines hole **345** in part **310,** suction device **330** applies a suction force to part **310.** This suction force pulls part **310** towards part **308** and ultimately, towards end effector **324.** The positioning of nozzle **332** of end effector **324** relative to part **308** and with respect to the reference coordinate system creates a reactive force in response to the suction force. This reactive force is equal and opposite to the suction force.

Suctioning is performed until a desired force static equilibrium is reached between the suction force and the reactive force. Once the desired force static equilibrium is reached, suctioning can be used to independently maintain clamp-up **341** even when tool **336** is moved away from clamp-up **341.**

In this manner, suction device **330** produces suction **349** sufficient to hold part **308** and part **310** in place relative to each other even after second force **344** has been removed (*e.g.*, when tool **336** is moved away and end effector **326** is switched out for another end effector). In other words, when tool **336** is moved away and out of contact with part **310,** such that second force **344** is removed, the suctioning of air through fastener hole **346** and into channel **334** of nozzle **332** maintains clamp-up **341** of part **308** and part **310.**

In one or more illustrative examples, control system **315** is used to control the operation of end effector **324,** end effector **326,** and end effector **328.** Control system **315** ensures that the desired force static equilibriums discussed above are established to thereby maintain clamp-up **341** and prevent any undesired shifting of part **308** relative to part **310** when end effector **326** for drilling is switched out with end effector **328** for fastener installation.

Specifically, end effector **326** with drilling tool **338** may be switched out with end effector **328** having fastener insertion tool **340.** Fastener insertion tool **340** is used to insert fastener **348** within fastener hole **346** while suction device **330** continues to suction air through fastener hole **346** from the opposite side **311** of assembly **304.** In this manner, assembly system **302** may allow installation of fastener **348** to be performed in a simple, easy, and efficient manner.

Suction device **330** provides a sufficient suction force that in combination with the reactive force provided by nozzle **332** maintains clamp-up **341** without requiring an additional force at side **312** of clamp-up **341.** In other words, suction device **330** and nozzle **332** together ensure that clamp-up **341** is independently maintained from a single side of clamp-up **341.**

Fastener **348** is installed while clamp-up **341** is maintained with suction **349.** In these illustrative examples, suctioning continues until fastener **348** is fully installed within fastener hole **346.** In some cases, fastener **348** is considered fully installed when a desired interference fit is formed between fastener **348** and fastener hole **346.** In other examples, fastener **348** is considered fully installed only after fastener **348** has been inserted within fastener hole **346** and fastener retaining hardware has been installed over fastener **348.** Fastener retaining hardware may include, for example, a collar, a nut, some other type of hardware, or a combination thereof. In other examples, fastener **348** may be considered fully installed after one or more other operations have been performed.

Once fastener **348** has been fully installed, suction **349** is no longer needed to maintain clamp-up. In other words, fastener **348** is used to maintain clamp-up **341** after suctioning has been stopped.

The illustration of manufacturing environment **100** in **Figure 1** is not meant to imply physical or architectural limitations to the manner in which an example embodiment may be implemented. Other components in addition to or in place of the ones illustrated may be used. Some components may be optional. Further, the blocks are presented to illustrate functional components. One or more of these blocks may be combined, divided, or combined and divided into different blocks when implemented in an example embodiment.

For example, in some cases, the drilling of fastener hole **346** may be part of a different process prior to part **308** and part **310** being brought together to form clamp-up **341.** For example, first hole **343** may be drilled into part **308** and hole **345** may be drilled into part **310** prior to these parts being clamped-up.

Part **308** and part **310** may then be positioned relative to each other. In these examples, part **308** and part **310** are positioned to align hole **343** and hole **345** at least one of concentrically or coaxially. Hole **343** and hole **345** may be sized such that when hole **343** and hole **345** are aligned together they form fastener hole **346.** In other examples, hole **343** and hole **345** may be determinate assembly (DA) holes. When hole **343** and hole **345** are determinate assembly holes and aligned coaxially, they form an index hole (not shown). Part **308** and part **310** may be temporarily mated using, for example, a temporary fastener installed through the index hole. The index hole may also be referred to as a reference hole, a guide hole, a tooling hole, or a through-hole.

In one or more examples, after the coaxial alignment of hole **343** and hole **345,** suction **349** is used to establish and maintain clamp-up **341** of part **308** and part **310.** This suctioning is formed at side **311** such that clamp-up **341** is a single-sided clamp-up. In some cases, when a temporary fastener is used to join part **308** and part **310,** suction **349** is applied simultaneously with the removal of the temporary fastener to thereby establish and maintain clamp-up **341.**

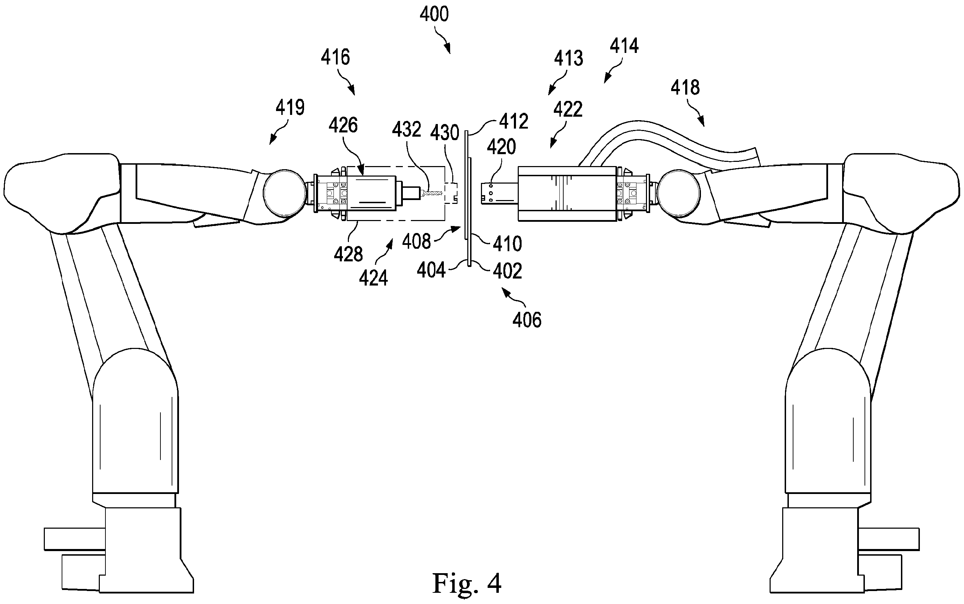

With reference to **Figures 4-15****,** illustrations of an assembly system for performing a fastener installation operation are depicted in accordance with an example embodiment. In some illustrative examples, the assembly system may be referred to as a fastener installation system.

**Figure 4** is an illustration of an end view of single function end effectors positioned relative to a lap splice in accordance with an example embodiment. Lap splice **400** is an example of one implementation for assembly **304** in **Figure 3** or a panel joint in assembly **304.** In addition to lap splice **400,** the example embodiments may be also applicable to other types of splices not shown.

Lap splice **400** includes first part **402** and second part **404,** which may be examples of implementations for part **308** and part **310** of **Figure 3****,** respectively. In other examples, lap splice **400** may include a third part (not shown) or some other number of parts. In one illustrative example, first part **402** and second part **404** take the form of fuselage panels. The size and scale of first part **402** and second part **404** in **Figures 4-15** is shown for illustrative purposes only. In other illustrative examples, the size of first part **402** and second part **404** may be smaller than or much larger than shown in **Figures 4-15****.**

Lap splice **400** has first side **406** and second side **408.** In this illustrative example, first side **406** is formed by surface **410** of first part **402** and second side **408** is formed by surface **412** of second part **404.** When first part **402** and second part **404** take the form of fuselage panels of a fuselage assembly, surface **410** of first part **402** may be facing an interior of the fuselage assembly and surface **412** of second part **404** may be facing an exterior of the fuselage assembly (the head of the fastener will be installed on the exterior surface, **412** when process completed).

In this illustrative example, assembly system **413** is positioned relative to assembly **409.** Assembly system **413** includes end effector **414,** end effector **416,** robotic device **418,** and robotic device **419.**

End effector **414** and end effector **416** are coupled to robotic device **418** and robotic device **419,** respectively. End effector **414** and end effector **416** may be examples of implementations for end effector **324** and end effector **326** of **Figure 3****,** respectively. End effector **414** is positioned relative to first side **406** of lap splice **400** and end effector **416** is positioned relative to second side **408** of lap splice **400.**

End effector **414** and end effector **416** may be single function end effectors. End effector **414** includes at least nozzle **420** and suction device **422,** which are examples of implementations of nozzle **332** and suction device **330,** respectively, from **Figure 3****.** End effector **416** includes tool **424** and drilling tool **426.** Tool **424** is depicted as transparent in **Figure 4** for illustrative purposes only. Tool **424** and drilling tool **426** are examples of implementations of tool **336** and drilling tool **338,** respectively, from **Figure 3****.**

In this illustrative example, tool **424** includes element **428** and element **430.** Element **428** takes the form of, for example, without limitation, a first cylindrical member that surrounds drilling tool **426.** Element **430** takes the form of, for example, without limitation, a second cylindrical member having a smaller diameter than the first cylindrical member but sufficiently large to allow drill bit **432** of drilling tool **426** to pass through the second cylindrical member. In some illustrative examples, element **430** is sufficiently large to allow drill shavings or chips to be collected during drilling.

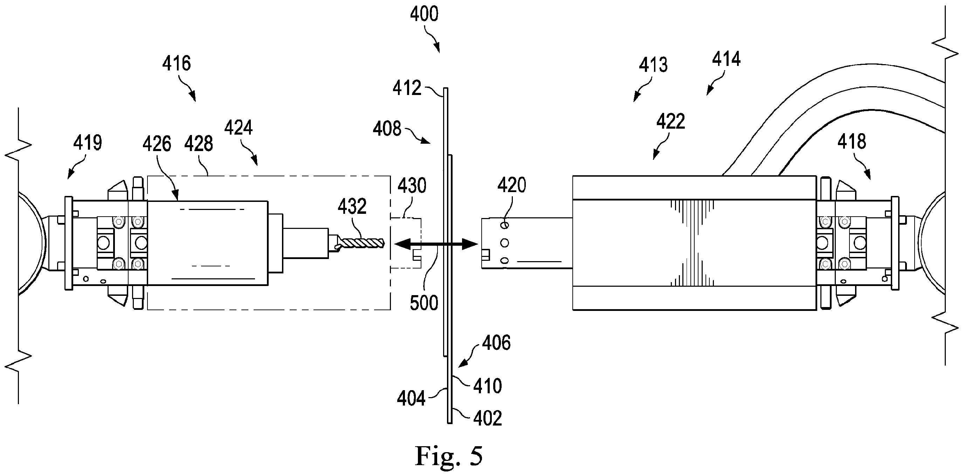

**Figure 5** is an illustration of an enlarged side view of end effector **414** and end effector **416** positioned relative to lap splice **400** in accordance with an example embodiment. In this illustrative example, end effector **414** and end effector **416** have been positioned in alignment with reference axis **500** through lap splice **400.** Reference axis **500** may be an axis substantially perpendicular to lap splice **400** that passes through lap splice **400** at the location at which a hole is to be drilled and a fastener is to be installed.

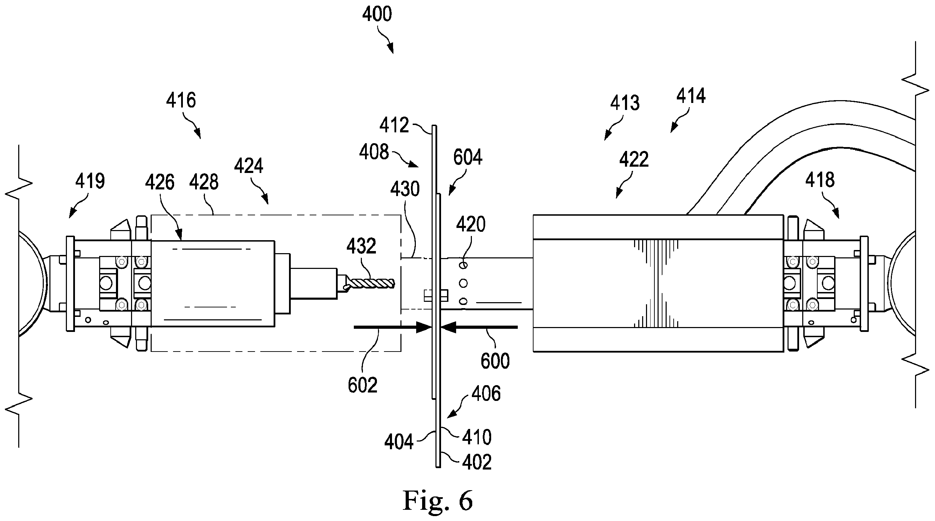

**Figure 6** is an illustration of a side view of end effector **414** and end effector **416** applying forces to lap splice **400** in accordance with an example embodiment. As depicted, at least one of end effector **414** or robotic device **418** has been used to move nozzle **420** into contact with first side **406** of lap splice **400.** Nozzle **420** is pushed against first side **406** to apply first force **600** to first side **406.** First force **600** is an example of first force **342** in **Figure 3****.** First force **600** is a mechanical force.

Similarly, at least one of end effector **416** or robotic device **419** has been used to move element **430** into contact with second side **408** of lap splice **400.** In particular, element **430** is pushed against second side **408** to apply second force **602** to second side **408.**

Nozzle **420** and element **430** are pushed against first part **402** and second part **404,** respectively, until a desired force static equilibrium is reached between first force **600** and second force **602** applied to lap splice **400.** Once this desired force static equilibrium has been reached, clamp-up **604** of first part **402** and second part **404** is achieved. In other words, first part **402** and second part **404** may be held in place such that each of these parts is held in a particular position relative to the other.

While nozzle **420** and element **430** are no longer pushed against first part **402** and second part **404,** respectively, they are kept fixed in the positions at which the desired force static equilibrium is achieved to maintain clamp-up **604.** In some cases, sealant may be present in between first part **402** and second part **404.**

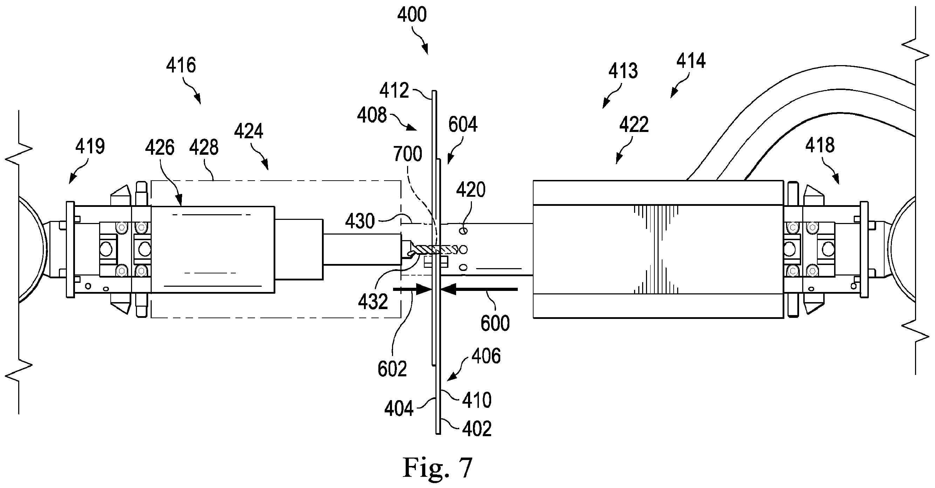

**Figure 7** is an illustration of a side view of a drilling operation in accordance with an example embodiment. Once clamp-up **604** of first part **402** and second part **404** has been established, drilling tool **426** of end effector **416** is operated to drill fastener hole **700** that extends through lap splice **400.** Fastener hole **700** may extend from second side **408** of second part **404** all the way through to first side **406** of first part **402.** In some cases, fastener hole **700** may be countersunk. Fastener **700** is an example of one implementation for fastener hole **346** in **Figure 3****.**

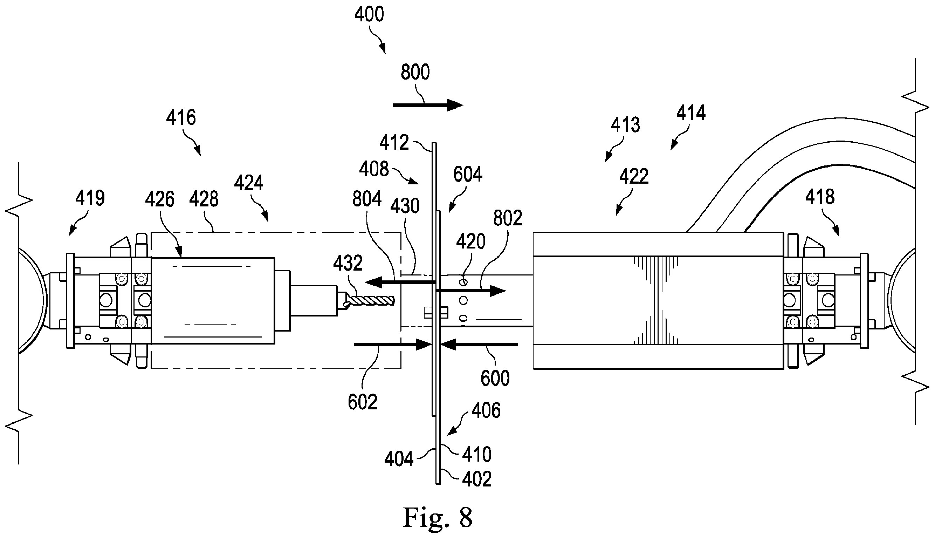

**Figure 8** is an illustration of a side view of a suctioning operation in accordance with an example embodiment. After fastener hole **700** has been drilled, drill bit **432** is moved away from second part **404.** For example, drill bit **432** may be retracted within element **428.**

Suction device **422** of end effector **414** is operated to suction air through fastener hole **700** from first side **406** of lap splice **400.** Air is suctioned through fastener hole **700** in the direction of arrow **800** from second side **408** of lap splice **400** towards first side **406** of lap splice **400.** The air is suctioned through fastener hole **700** and into nozzle **420.**

This suctioning creates a force, which may be suction force **802,** that is applied to second part **404.** Suction force **802** pulls second part **404** towards first part **402.** Reactive force **804** is created in response to suction force **802** by the positioning of nozzle **420** in contact with first part **402.** Suctioning is performed until the desired force static equilibrium is achieved between suction force **802** and reactive force **804.** For example, suction power may be increased until the desired force static equilibrium is achieved and sufficient suction power has been generated to allow clamp-up **604** to be maintained via suction independently of first force **600** and second force **602.**

In these illustrative examples, suction device **422** may be operated to continue to suction air through fastener hole **700** until the fastener installation operation has been completed. In some examples, each of element **430** and nozzle **420,** or both, may have at least one of a notch, a groove, a port, an opening, or some other type of vent for allowing air to pass in and out. This venting helps ensure that the suction power is not greater than desired. For example, element **430** may have one or more notches along the edge of element **430** that comes into contact with second part **404** to help make moving element **430** away from second part **404** while suctioning is ongoing easier.

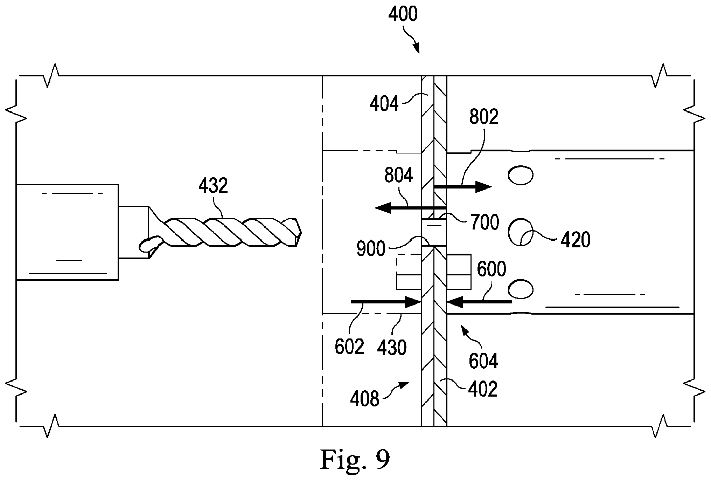

**Figure 9** is an illustration of an enlarged cross-sectional side view of first part **402** and second part **404** in accordance with an example embodiment. This view allows fastener hole **700** and wall **900** that defines the portion of fastener hole **700** formed within second part **404** to be more clearly seen. Wall **900** may also be referred to as a hole wall.

As depicted, suction force **802** may be a gripping force that grips wall **900** defining the portion of fastener hole **700** formed within second part **404** to thereby pull second part **404** towards first part **402,** and ultimately, towards nozzle **420.** Nozzle **420** applies reactive force **804** on first part **402.**

Together, suction force **802** and reactive force **804** may be used to independently maintain clamp-up **604** even after element **430** is moved away and out of contact with second part **404.** By allowing clamp-up **604** to be maintained independently of first force **600** and second force **602,** end effector **416** may be switched out with a different end effector. For example, at least one of end effector **416** or robotic device **419** may be operated to move element **430** of tool **424** away from lap splice **400.** Robotic device **419** may then be switched out with a different robotic device and a different effector may be positioned relative to lap splice **400.**

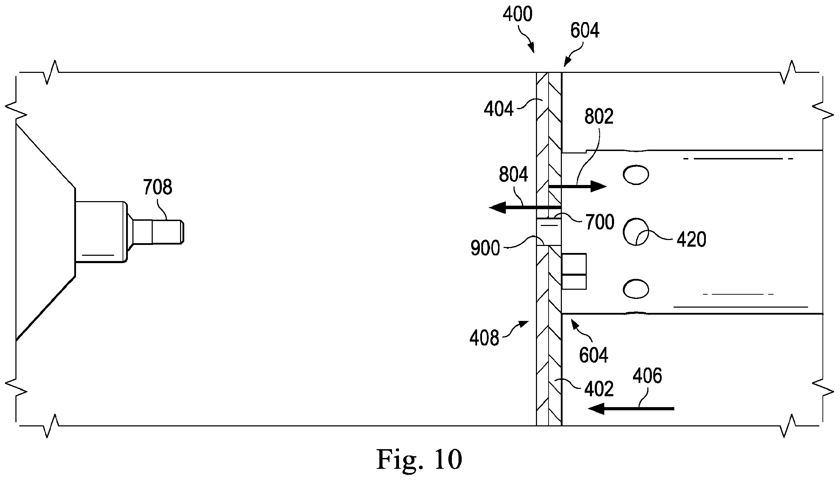

**Figure 10** is an illustration of an enlarged side view of a single-sided clamp-up in accordance with an example embodiment. As depicted, element **430** shown in the previous figures has been moved out of contact with first part **402.** But even without first force **600** and second force **602,** suction force **802** and reactive force **804** are able to independently maintain clamp-up.

Thus, single-sided clamp up is achieved. This type of single-sided clamp-up at first side **406** of lap splice **400** frees up the space around fastener hole **700** at second side **408** of lap splice **400** to allow for simpler and easier switching out of end effectors. No specialized tools are needed at second side **408** of lap splice **400** to maintain clamp-up **604.**

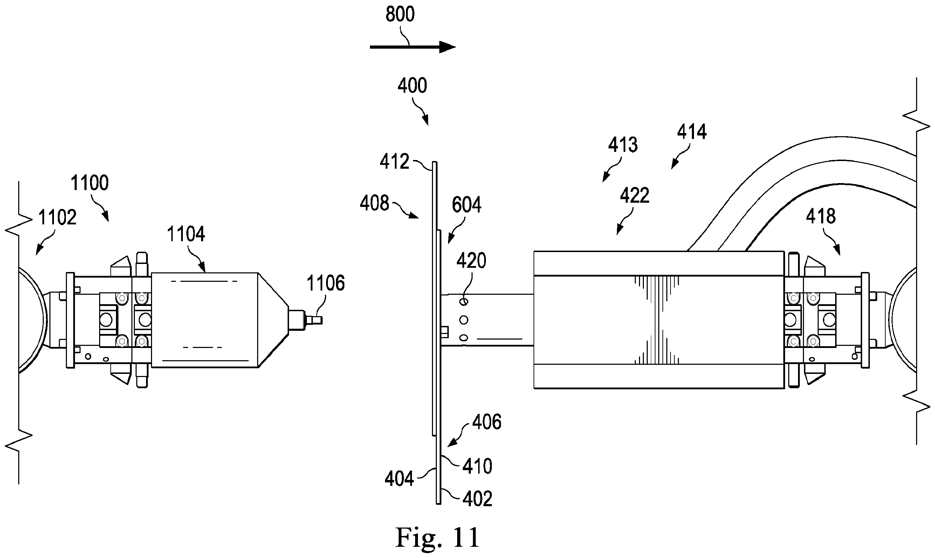

**Figure 11** is an illustration of another side view of the single-sided clamp-up from **Figure 10** in accordance with an example embodiment. As depicted, end effector **416** from **Figures 4-9** has been switched out with end effector **1100,** which is coupled to robotic device **1102.** End effector **1100** and robotic device **1102** are part of assembly system **413.**

In this illustrative example, robotic device **419** with end effector **416** is moved to allow robotic device **1102** with end effector **1100** to be positioned relative to second side **408** of lap splice **400.** In other illustrative examples, end effector **416** may be swapped with end effector **1100** and end effector **1100** then coupled to robotic device **419.** As depicted, the switching of end effectors occurs after fastener hole **700** has been drilled through lap splice **400** and single-sided clamp-up has been achieved.

In this illustrative example, end effector **1100** includes fastener insertion tool **1104.** At least one of end effector **1100** or robotic device **1102** may be used to move and position fastener insertion tool **1104** relative to fastener hole **700** that has been drilled through lap splice **400.** Fastener insertion tool **1104** is used to insert fastener **1106** into fastener hole **700.** In one or more examples, fastener insertion tool **1104** installs fastener **1106** by forming a desired interference fit between fastener **1106** and fastener hole **700.**

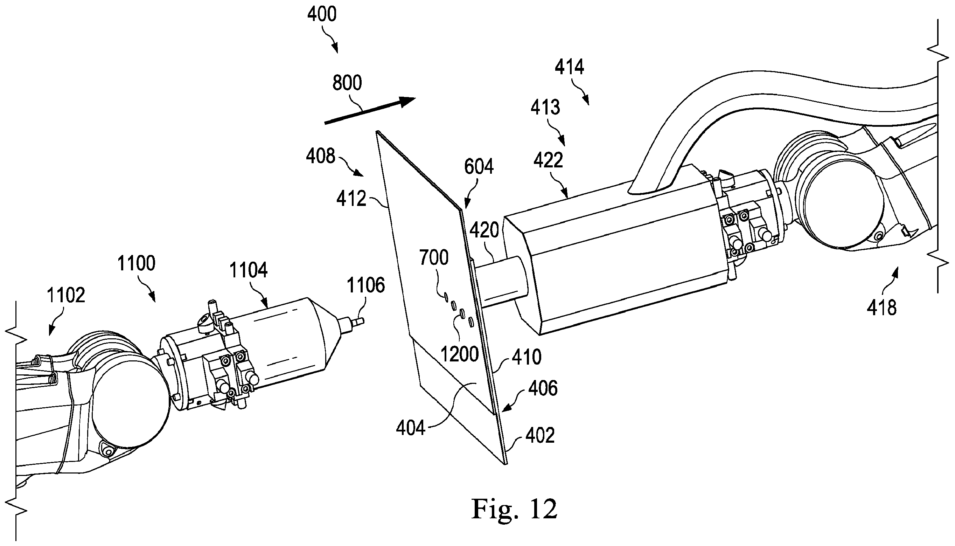

**Figure 12** is an illustration of a perspective view of end effector **1100** positioned relative to second side **408** of lap splice **400** in accordance with an example embodiment. As depicted, fastener hole **700** is one of a plurality of fastener holes through lap splice **400** in which fasteners **1200** have been installed.

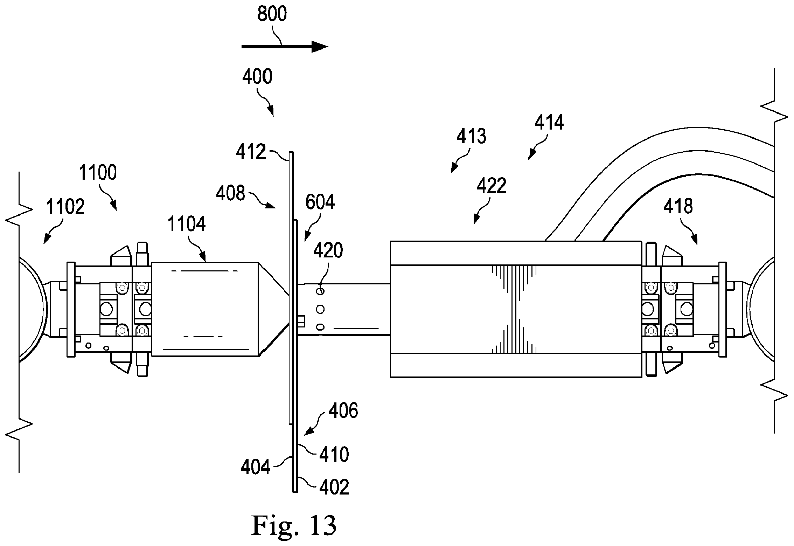

**Figure 13** is an illustration of a side view of fastener insertion tool **1104** being used to insert fastener **1106** (shown in **Figures 11** and **12**) into fastener hole **700** (shown in **Figure 11**) in accordance with an example embodiment. Fastener insertion tool **1104** inserts fastener **1106** into fastener hole **700** while suction device **422** continues to suction air through fastener hole **700.**

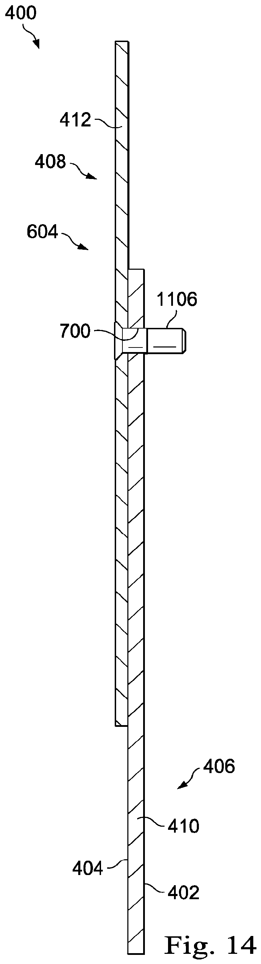

**Figure 14** is an illustration of a cross-sectional view of the installed fastener **1106** in lap splice **400** in accordance with an example embodiment. In this particular illustrative example, fastener **1106** is a countersunk fastener and fastener hole **700** is a countersunk hole.

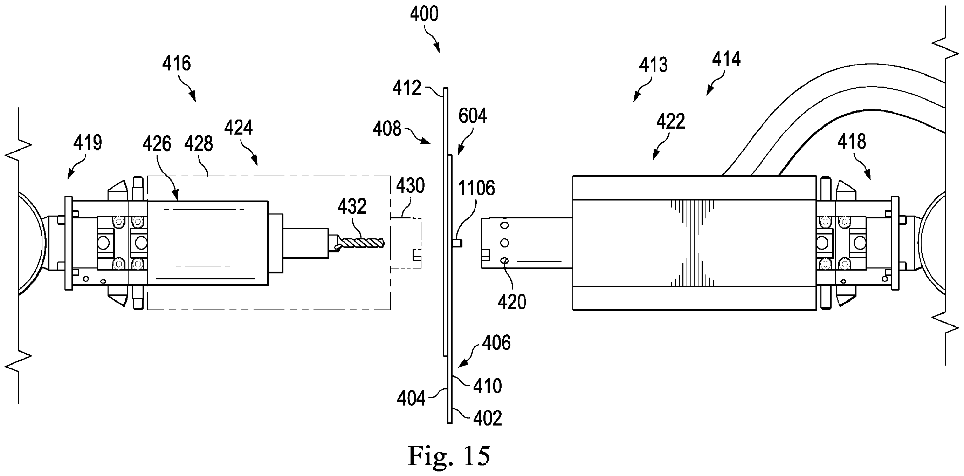

**Figure 15** is an illustration of a completion of the fastener installation operation in accordance with an example embodiment. As depicted, fastener **1106** has been installed in lap splice **400.** Once fastener **1106** has been installed, suctioning is no longer needed to maintain clamp-up **504** from the previous figures. Fastener **1106** is capable of independently maintaining clamp-up **604** with respect to the portion of lap splice **400** in which fastener **1106** is installed.

In one or more illustrative examples, installation of fastener **1106** is completed once a desired interference fit has been formed between fastener **1106** and fastener hole **700.** Once this interference fit has been formed, suctioning is discontinued. In other illustrative examples, fastener **1106** is considered fully installed when fastener retaining hardware is installed over fastener **1106.** Suctioning continues until all the operations required to complete installation of fastener **1106** have been completed to ensure that the fastener installation meets requirements.

After fastener **1106** is fully installed, end effector **414** may be moved away from lap splice **400** and repositioned relative to a next location on lap splice **400** at which a fastener is to be installed. Further, end effector **1100** from **Figures 11-13** may be switched out with end effector **416** and end effector **416** may be repositioned relative to the next location on lap splice **400** at which the new fastener is to be installed.

The illustrations of end effectors, tools, devices, and other components in **Figures 4-15** are not meant to imply physical or architectural limitations to the manner in which an example embodiment may be implemented. Other components in addition to or in place of the ones illustrated may be used. Some components may be optional. The different components shown in **Figures 4-15** may be illustrative examples of how components shown in block form in **Figure 3** can be implemented as physical structures. Additionally, some of the components in **Figures 4-15** may be combined with components in **Figure 3****,** used with components in **Figure 3****,** or a combination of the two.

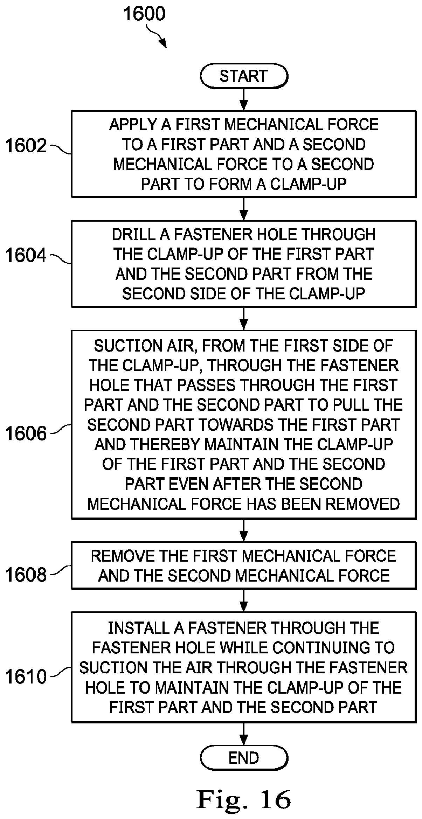

**Figure 16** is a flowchart of a method for performing a fastener installation in accordance with an example embodiment. Process **1600** illustrated in **Figure 16** may be implemented using assembly system **302** from **Figure 3** or assembly system **413** from **Figures 4-15****.**

The process may begin by applying a first mechanical force to a first part and a second mechanical force to a second part to form a clamp-up of the first part and the second part (operation **1602**). The assembly includes a first part and a second part positioned in contact with each other. The first part forms the first side of the clamp-up and the second part forms the second side of the clamp-up.

Optionally, a fastener hole is drilled through the clamp-up of the first part and the second part from the second side of the clamp-up (operation **1604**). The fastener hole extends from the second side to the first side of the assembly. The fastener hole may be formed by a first hole drilled through the first part and a second hole drilled through the second part. In these illustrative examples, the first hole and the second hole are coaxial.

Air is suctioned, from the first side of the clamp-up, through the fastener hole that passes through the first part and the second part to pull the second part towards the first part and thereby maintain the clamp-up of the first part and the second part even after the second mechanical force has been removed (operation **1606**). In other words, the suctioning of the air through the fastener hole maintains the "clamp-up" of the first part and the second part without requiring use of the second mechanical force at the second side of the clamp-up.

In particular, in operation **1606,** suctioning is performed at a volumetric flow rate sufficient to maintain the clamp-up from just the first side of the clamp-up without requiring use of additional force at the second side of the clamp-up. Air is suctioned through the fastener hole to grip a wall of the second hole in the second part and thereby pull the second part towards the first part.

In these examples, air is suctioned from the first side of the clamp-up through the fastener hole in a direction towards the first part and at a volumetric flow rate sufficient to maintain a gripping of the wall of the second hole while overcoming a volume of suction lost at the second side of the clamp-up. For example, some volume of suction or suction force may be lost due to an open end of the fastener hole at the second side.

In some examples, depending on the implementation, operation **1606** may be begun after operation **1604** has been completed or during operation **1604.** In other words, suctioning may be performed only after the fastener hole has been drilled or while the fastener hole is being drilled.

The first mechanical force and the second mechanical force are removed (operation **1608**). Operation **1608** includes, for example, switching out the end effector that performed the drilling of operation **1604** with a new end effector. The suctioning performed in operation **1606** continues in order to maintain the clamp-up of the first part and the second part during the switching out of the end effectors.

Thereafter, a fastener is installed within the fastener hole while continuing to suction the air through the fastener hole to maintain the clamp-up of the first part and the second part (operation **1610**). In one or more illustrative examples, operation **1610** includes inserting the fastener into the fastener hole and forming a desired interference fit. In other illustrative examples, operation **1610** includes inserting the fastener into the fastener hole and installing fastener retaining hardware around the elongate portion of the fastener extending through the fastener hole.

Continuing to perform the suctioning of air in operation **1606** while operation 1610 is performed ensures that the clamp-up of the first part and the second part is maintained throughout the insertion of the fastener. The suctioning of the air through the hole may be continued until the entire fastener installation operation is completed. For example, suctioning may be continued to maintain the clamp-up until a desired interference fit is formed between the fastener and the fastener hole.

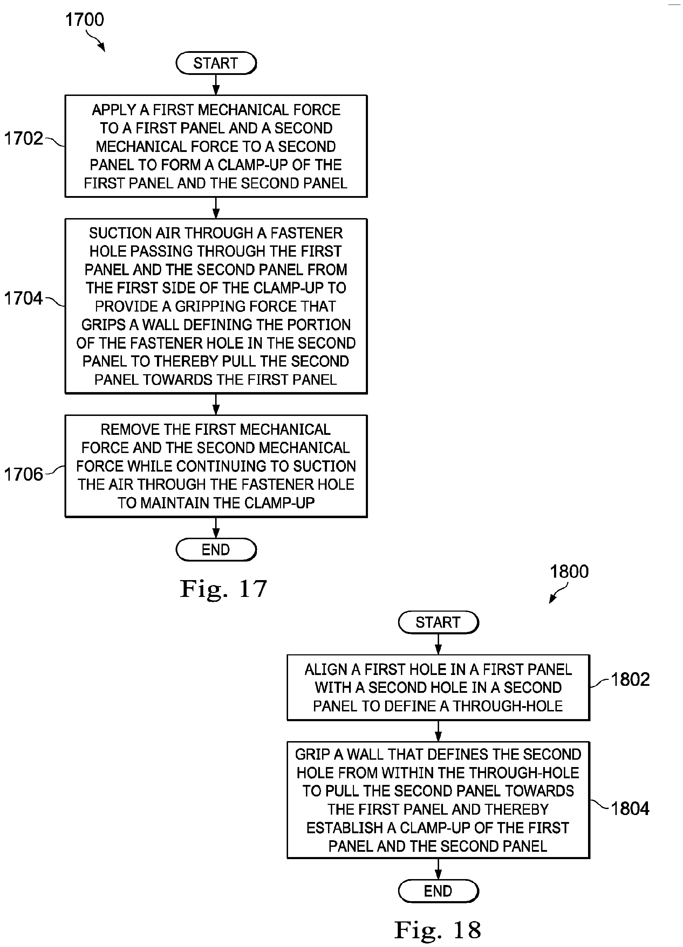

**Figure 17** is a flowchart of a process for maintaining a clamp-up in accordance with an example embodiment. Process **1700** illustrated in **Figure 17** may be performed using, for example, assembly system **302** from **Figure 3** or assembly system **413** from **Figures 4-15****.**

Process **1700** may begin by applying a first mechanical force to a first panel and a second mechanical force to a second panel to form a clamp-up of the first panel and the second panel (operation **1702**). The first panel and the second panel are fuselage panels.

Operation **1702** may be performed by applying the first force using a tool coupled to a first end effector, such as end effector **414** in **Figure 4****.** The tool may be, for example, a nozzle, such as nozzle **420** in **Figure 4****.** However, in other illustrative examples, the tool may be some other type of member, element, or structural component. The second force is applied using a tool coupled to a second end effector, such as end effector **416** in **Figure 4****.**

Air is suctioned through a fastener hole passing through the first panel and the second panel from the first side of the clamp-up to provide a gripping force that grips a wall defining the portion of the fastener hole in the second part to thereby pull the second part towards the first part (operation **1704**). In operation **1704,** a partial vacuum is drawn through the fastener hole and through the nozzle positioned relative to the first panel at the first side of the clamp-up to maintain the clamp-up.

In some illustrative examples, the fastener hole may be drilled as part of the process **1700.** For example, the hole may be drilled between the performing of operations **1702** and **1704.** In other illustrative examples, the drilling of the fastener hole is part of a different process or is performed prior to process **1700.** For example, a first hole may be drilled into the first panel and a second hole may be drilled into the second panel prior to these panels being "clamped-up." The first panel and the second panel may then be positioned relative to each other such that the holes are aligned to form a single coaxial fastener hole prior to operation **1702.** Afterwards, operation **1702** may be performed to initiate process **1700.**

With reference again to operation **1704,** the suctioning of the air is performed with sufficient suction power (*e.g.,* a sufficient volumetric flow rate) to maintain the clamp-up of the first panel and the second panel without requiring the second mechanical force. The suctioning maintains the clamp-up when the gripping force provided by the suctioning is opposite and equal to the first mechanical force being applied. As the second panel is pulled towards the first panel, the first mechanical force causes the first panel to exert an equal reactive force on the second panel to thereby maintain the clamp-up.

Thereafter, the second mechanical force is removed while continuing to suction the air through the fastener to maintain the clamp-up (operation **1706**). In some illustrative examples, process **1700** terminates. In other illustrative examples, process **1700** includes installing a fastener through the fastener hole from the second side of the clamp-up while continuing to suction the air through the fastener hole from the first side to maintain the clamp-up during fastener installation.

**Figure 18** is a flowchart of a process for establishing a clamp-up in accordance with an example embodiment. Process **1800** illustrated in **Figure 18** may be performed using, for example, assembly system **302** from **Figure 3** or assembly system **413** from **Figures 4-15****.**

Process **1800** begins by aligning a first hole in a first panel with a second hole in a second panel to define a through-hole (operation **1802**). In these illustrative examples, operation **1802** is performed to at least one of concentrically or coaxially align the first hole and the second hole to define the through-hole. As one illustrative example, the first panel and the second panel are positioned relative to each other to coaxially align the first hole with the second hole.

In some examples, the through-hole takes the form of a fastener hole, such as fastener hole **346** in **Figure 3****.** In other examples, the through-hole takes the form of an index hole. For example, the first hole and the second hole that are aligned in operation **1802** may be determinate assembly holes. The first and second holes may be coaxially aligned in operation **1802** to form an index hole. In one or more illustrative examples, the first panel and the second panel in operation **1802** may be fuselage panels, wing panels, or some other type of panels.

In still other illustrative examples, aligning the first hole in the first panel with the second hole in the second panel in operation **1802** comprises drilling the first hole in the first panel and drilling the second hole in the second panel in a manner that coaxially aligns these two holes and forms a through-hole through the first panel and the second panel.

Thereafter, a hole-wall that defines the second hole is gripped from within the through-hole to pull the second panel towards the first panel and thereby establish a clamp-up of the first panel and the second panel (operation **1804**). The clamp-up established in operation **1804** is a single-sided clamp-up. Operation **1804** may be performed using, for example, suction to grip the wall of the second hole. Air is suctioned through the through-hole such that the suctioning force provides a gripping force to grip the wall of the second hole. In particular, a partial vacuum is drawn through the through-hole to thereby provide a gripping force that grips the wall of the second hole. The partial vacuum is created despite the outward-facing end of the second hole being an open end.

The clamp-up formed in operation **1804** may be maintained until one or more operations are performed with respect to the through-hole. For example, the clamp-up may be maintained until either a temporary fastener has been installed to maintain clamp-up or a drilling operation has been performed to enlarge the through-hole to form a fastener hole. In some cases, the clamp-up is maintained until a fastener installation operation has been performed to install a fastener within the through-hole, wherein the hole diameter is within tolerance for a fastener installation. In some cases, the clamp-up may be maintained until a drilling operation and a fastener installation operation have been performed. In still other examples, the clamp-up is maintained until a fastener installation operation has been performed that includes insertion of the fastener through the through-hole and the securing of a nut or collar onto the fastener.

The single-sided clamp-up allows various tools and devices to be moved around relative to the location of the through-hole from the opposite side from where the partial vacuum is being drawn. The single-sided clamp-up improves the efficiency of assembly processes.

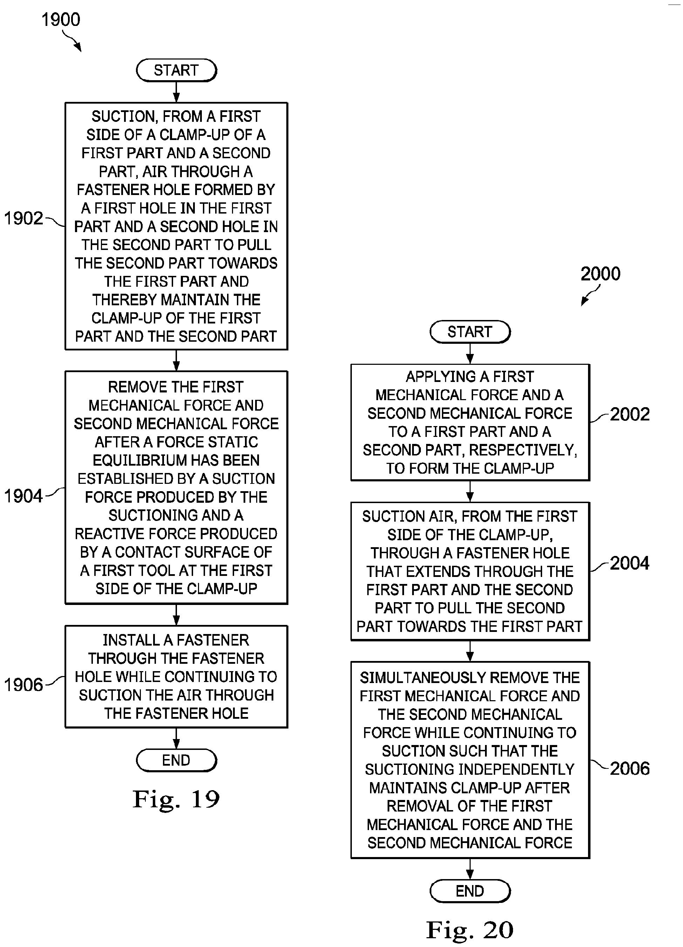

**Figure 19** is a flowchart of a process for maintaining a single-sided clamp-up in accordance with an example embodiment. Process **1900** illustrated in **Figure 19** may be performed using, for example, assembly system **302** from **Figure 3** or assembly system **413** from **Figures 4-15****.** In particular, process **1900** may be performed using end effector **324** in **Figure 3** or end effector **414** in **Figures 4-15****.**

Process **1900** includes suctioning, from a first side of a clamp-up of a first part and a second part, air through a fastener hole formed by a first hole in the first part and a second hole in the second part to pull the second part towards the first part and thereby maintain the clamp-up of the first part and the second part (operation **1902**). In one or more illustrative examples, operation **1902** includes suctioning, from the first side of the clamp-up, the air through the fastener hole to grip a wall that defines the second hole in the second part to thereby pull the second part towards the first part.

Optionally, process **1900** also includes removing the first mechanical force and second mechanical force after a force static equilibrium has been established by a suction force produced by the suctioning and a reactive force produced by a contact surface of a first tool at the first side of the clamp-up (operation **1904**), with the process terminating thereafter. The first mechanical force may have been applied by the first tool at the fist side of the clamp-up. The second mechanical force may have been applied by a second tool at a second side of the clamp-up during the suctioning.

The suction force and the reactive force maintain the clamp-up of the first part and the second part without the first mechanical force and the second mechanical force. In these illustrative examples, the first mechanical force and the second mechanical force are applied at least until the force static equilibrium is established by the suction force produced by the suctioning and the reactive force produced by the contact surface of the first tool at the first side of the clamp-up.

Optionally, process **1900** further includes installing a fastener through the fastener hole while continuing to suction the air through the fastener hole (operation **1906**). In operation **1906,** the suctioning may be performed at least until the fastener is fully installed.

**Figure 20** is a flowchart of a process for maintaining a single-sided clamp-up in accordance with an example embodiment. Process **2000** illustrated in **Figure 20** may be performed using, for example, assembly system **302** from **Figure 3** **or** assembly system **413** from **Figures 4-15****.**

Process **2000** begins by applying a first mechanical force and a second mechanical force to a first part and a second part, respectively, to form the clamp-up (operation **2002**). The first part forms a first side of the clamp-up and the second part forms a second side of the clamp-up. Next, air is suctioned, from the first side of the clamp-up, through a fastener hole that extends through the first part and the second part to pull the second part towards the first part (operation **2004**). The first mechanical force and the second mechanical force are removed simultaneously while continuing to suction such that the suctioning independently maintains clamp-up after removal of the first mechanical force and the second mechanical force (operation **2006**), with the process terminating thereafter.

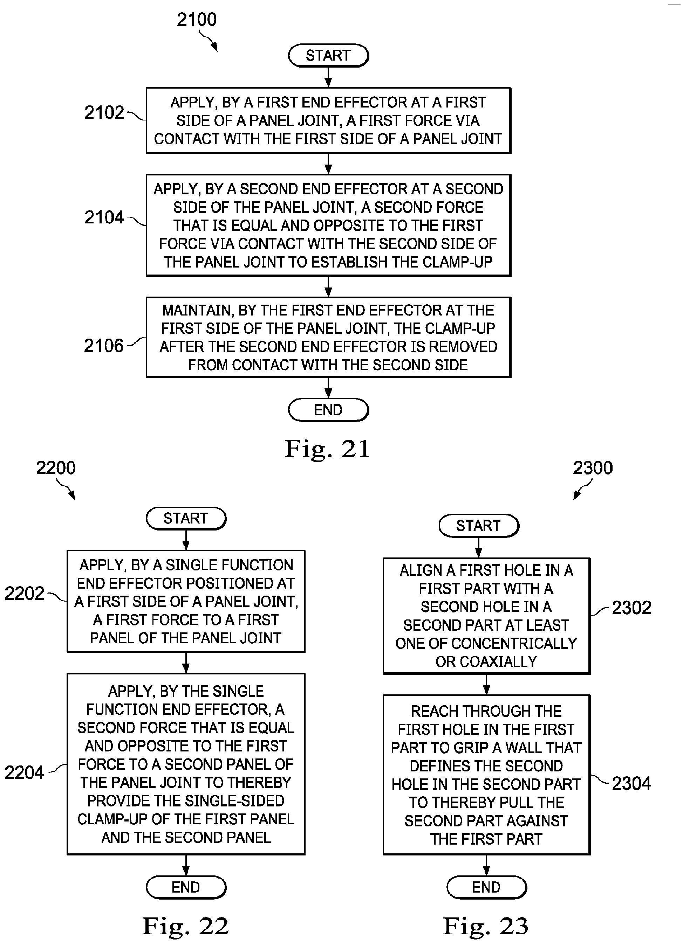

**Figure 21** is a flowchart of a process for maintaining a single-sided clamp-up in accordance with an example embodiment. Process **2100** illustrated in **Figure 21** may be performed using, for example, assembly system **302** from **Figure 3** or assembly system **413** from **Figures 4-15****.**

Process **2100** includes applying, by a first end effector at a first side of a panel joint, a first force via contact with the first side of a panel joint (operation **2102**). Process **2100** includes applying, by a second end effector at a second side of the panel joint, a second force that is equal and opposite to the first force via contact with the second side of the panel joint to establish the clamp-up (operation **2104**). Further, process **2100** includes maintaining, by the first end effector at the first side of the panel joint, the clamp-up after the second end effector is removed from contact with the second side (operation **2106**), with the process terminating thereafter.

**Figure 22** is a flowchart of a process for maintaining a single-sided clamp-up in accordance with an example embodiment. Process **2200** illustrated in **Figure 22** may be performed using, for example, assembly system **302** from **Figure 3** or assembly system **413** from **Figures 4-15****.**

Process **2200** includes applying, by a single function end effector positioned at a first side of a panel joint, a first force to a first panel of the panel joint (operation **2202**). Process **2200** further includes applying, by the single function end effector, a second force that is equal and opposite to the first force to a second panel of the panel joint to thereby provide the single-sided clamp-up of the first panel and the second panel (operation **2204**), with the process terminating thereafter.

In some illustrative examples, one or more operations may be performed prior to operation **2202.** For example, in some cases, holes are created in the first panel and the second panel prior to operation **2202.** These holes may be formed via drilling, punching through the panels, or by some other hole-making operation. These holes may be drilled while an initial clamp-up of the panels has been established such that holes are aligned at least one of concentrically or coaxially to form a through-hole (fastener hole). In other illustrative examples, determinate assembly holes may be formed in the panels individually and then the panels later brought together to align the holes.

**Figure 23** is a flowchart of a process for providing a single-sided clamp-up in accordance with an example embodiment. Process **2300** illustrated in **Figure 23** may be performed using a single function end effector, such as end effector **324** in **Figure 3** or end effector **414** described in **Figures 4-15****.**

Process **2300** includes, optionally, aligning a first hole in a first part with a second hole in a second part at least one of concentrically or coaxially (operation **2302**). In some examples, operation **2302** includes drilling through a clamp-up formed by the first part and the second part to form the first hole and the second hole that are at least one of concentrically or coaxially aligned. In one or more illustrative examples, operation **2302** includes simply aligning the first part already having the first hole with the second part already having the second hole (e.g. determinate assembly holes) to thereby align the first hole and the second hole.

Next, process **2300** includes reaching through the first hole in the first part to grip a wall that defines the second hole in the second part to thereby pull the second part against the first part (operation **2304**), with the process terminating thereafter. In some examples, operation **2304** includes creating a pressure differential that acts on the wall of the second hole in the second part to pull the second part against the first part. In one or more examples, operation **2304** includes suctioning, by a suction device positioned relative to the first part, air through the first hole and the second hole to pull the second part towards the first part.

In this manner, process **2300** provides a method for establishing and maintaining a clamp-up. In particular, a single-sided clamp-up is provided.

The different example embodiments recognize and consider that it is desirable to have methods and systems for improving the efficiency and production times for building assemblies. For example, the example embodiments recognize that it is desirable to have fully automated methods and systems for concurrently performing multiple fastener installation operations along an assembly, such as a fuselage assembly. Further, the example embodiments recognize that using multiple end effectors to provide single-sided clamp-ups at multiple locations at a first side of the assembly enables single function end effectors to be moved around on the opposite side of the assembly. This movement and interchangeability of the single function end effectors on the opposite side of the assembly enables multiple tasks to be concurrently performed in a manner that meets desired takt and production times.

Further, it is desirable to reduce end effector complexity because complexity may result in more maintenance and slower production rates than desired. For example, highly complex multifunction end effectors, which are typically heavy, may require more maintenance and may be more difficult to repair and/or replace as compared to single function end effectors that are less complex. Further, because the multifunction end effectors are typically very large and heavy, these types of end effectors require large robots to move them around which makes these multifunction end effectors less nimble than desired (i.e. less easily manipulatable than desired). Single function end effectors may thus require less down time, which may improve production rates.

In certain instances, switching between the different functions of a multifunction end effector may be more complex than desired or take more time than desired, which may result in in slower production rates. The example embodiments, however, recognize and take into account that robotic devices with coupled with much lighter single function end effectors can be easily and quickly swapped out with other robotic devices having single function end effectors because of the smaller size and scale needed for these robotic devices. In this manner, production rates may be improved. Because single function end effectors are much lighter and less massive than multifunction end effectors, single function end effectors may be moved around using smaller robotic devices that are nimbler than the larger robotic devices needed for multifunction end effectors.

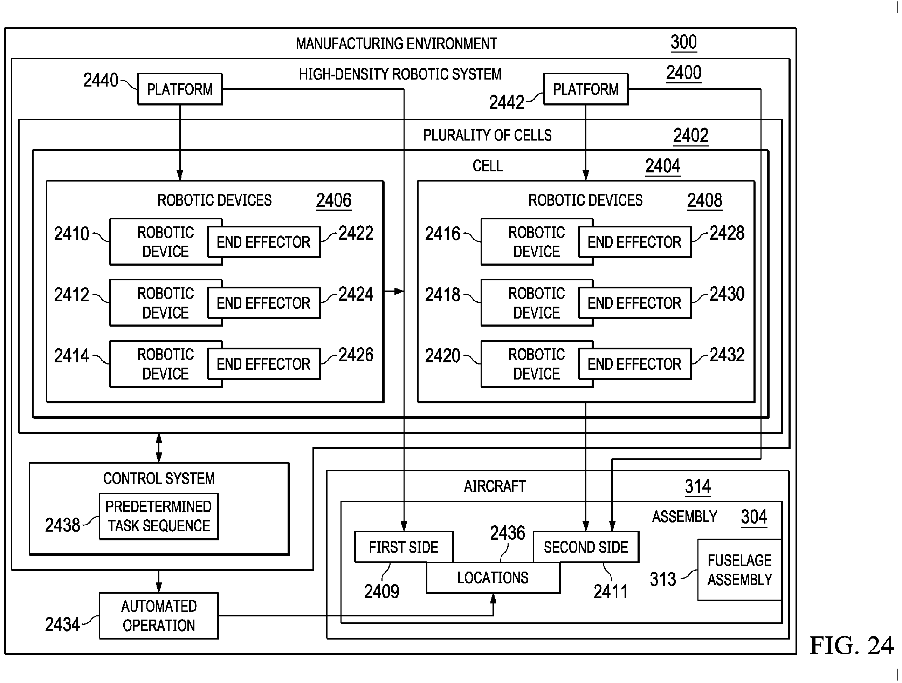

With reference now to **Figure 24****,** a block diagram of a manufacturing environment is depicted in accordance with an example embodiment. Manufacturing environment **300** in **Figure 24** is similar to manufacturing environment **300** from **Figure 3****.** High-density robotic system **2400** includes a plurality of cells **2402.** Each of cells **2402** is an example of one implementation for assembly system **302** described in **Figure 3****.**

Cells **2402,** which may also be referred to as robotic cells or high-density robotic cells, are used to build assembly **304.** As previously described, in some examples, assembly **304** takes the form of fuselage assembly **313.** In other examples, assembly **304** may take the form of a wing assembly or some other assembly for aircraft **314.** Each of cells **2402** includes robotic devices for performing various operations at locations along assembly **304.**

Cell **2404** is an example of one of plurality of cells **2402.** Cell **2404** includes robotic devices **2406** and robotic devices **2408,** which may also be referred to as a first plurality of robotic devices and a second plurality of robotic devices, respectively. Each of robotic devices **2406** may be implemented in a manner similar to robotic device **318** described in **Figure 3****.** Further, each of robotic devices **2408** may be implemented in a manner similar to robotic device **320** in **Figure 3****,** robotic device **322** in **Figure 3****,** or a different type of robotic device.

In these illustrative examples, robotic devices **2406** are positioned at and used at first side **2409** of assembly **304,** while robotic devices **2408** are positioned at and used at second side **2411** of assembly **304.** When assembly **304** takes the form of fuselage assembly **313,** first side **2409** is accessible from within an interior of fuselage assembly **313,** while second side **2411** is accessible from an exterior of fuselage assembly **313.** For example, first side **2409** may be at or near the inner mold line (IML) of fuselage assembly **313** (*e.g.,* on the side facing the inner mold line), while second side **2411** may be at or near the outer mold line (OML) of fuselage assembly **313** (*e.g.,* on the side facing the outer mold line). Accordingly, in some examples, robotic devices **2406** may be referred to as IML robotic devices and robotic devices **2408** may be **referred** to as OML robotic devices.

In these illustrative examples, robotic devices **2406** includes robotic device **2410,** second robotic device **2412,** and third robotic device **2414,** which may be referred to as a first robotic device, a second robotic device, and a third robotic device, respectively. Similarly, robotic devices **2408** includes robotic device **2416,** robotic device **2418,** and robotic device **2420,** which may be referred to as a first robotic device, a second robotic device, and a third robotic device, respectively.

End effector **2422,** end effector **2424,** and end effector **2426** are coupled to robotic device **2410,** robotic device **2412,** and robotic device **2414,** respectively. End effector **2422,** end effector **2424,** and end effector **2426** may also be referred to as a first end effector, a second end effector, and a third end effector, respectively. These end effectors are single function end effectors. In one or more illustrative examples, each of end effectors **2422, 2424,** and **2426** is implemented in a manner similar to end effector **324** described in **Figure 3****.** For example, each of end effectors **2422, 2424,** and **2426** may include a nozzle and a suction device similar to nozzle **332** and suction device **330,** respectively, from **Figure 3****.**

End effector **2428,** end effector **2430,** and end effector **2432** are coupled to are coupled to robotic device **2416,** robotic device **2418,** and robotic device **2420,** respectively. End effector **2428,** end effector **2430,** and end effector **2432** may also be referred to as a first end effector, a second end effector, and a third end effector, respectively. These end effectors are single function end effectors.

In one or more illustrative examples, end effector **2428** is implemented in a manner similar to end effector **326.** For example, end effector **2428** may include a tool and a drilling tool (not shown) similar to tool **336** and drilling tool **338,** respectively, from **Figure 3****.** End effector **2430** may include an inspection device (not shown) for inspecting holes. In these examples, end effector **2432** is implemented in a manner similar to end effector **328** in **Figure 3****.** For example, end effector **2432** may include a fastener insertion tool (not shown) similar to fastener insertion tool **340** in **Figure 3****.**

Cell **2404** is used to perform automated operation **2434** at each of a plurality of locations **2436** along assembly **304.** In these illustrative examples, automated operation **2434** takes the form of a fastener installation. Accordingly, each of locations **2436** may also be referred to as a fastener installation point. In one illustrative example, the fastener installation comprises a plurality of tasks (operations or sub-operations) such as, for example, without limitation, a clamp-up task, a drilling task, a fastener insertion task, and an inspection task. Cell **2404** is used to perform these various tasks according to predetermined task sequence **2438.**

In these illustrative examples, predetermined task sequence **2438** requires that at any given one of locations **2436,** the drilling task is performed before the inspection task and the inspection test is performed before the fastener insertion task. Depending on the implementation, predetermined task sequence **2438** may include zero, one, two, or some other number of tasks may be performed before the drilling task, between the drilling task and the inspection task, between the inspection task and the fastener insertion task, after the fastener insertion task, or a combination thereof.

Control system **315** controls cell **2404** to quickly, accurately, and efficiently perform automated operation **2434** at each of locations **2436** along a selected portion of assembly **304** according to predetermined task sequence **2438.** Predetermined task sequence **2438** requires that the above-described tasks are performed concurrently at various locations of locations **2436.** As used herein, concurrently means simultaneously or generally at the same time. For example, two tasks that begin at the same time, end at the same time, or both may be considered as being performed concurrently. Further, when one task is performed over a duration of time that overlaps with the performance of another task, these two tasks may be considered as being performed concurrently. In still other examples, two tasks that are performed within a given time interval may be considered as being performed concurrently, regardless of whether the duration of time for the actual tasks themselves overlap.

For example, control system **315** may control cell **2404** to perform a drilling task at one location of locations **2436** at the same time (or within a same time interval) as an inspection task at another location of locations **2436.** Further, control system **315** may control cell **2404** to perform a drilling task at one location of locations **2436** at the same time (or within a same time interval) as an inspection task at another location of locations **2436** and a fastener insertion task at yet another location of locations **2436.** The inspection task may be a hole inspection task.

Thus, control system **315** controls cell **2404** to perform multiple fastener installation operations concurrently by performing the specialized tasks that make up these multiple fastener installation operations in a sequential fashion but at multiple locations at the same time. Further, control system **315** may control all of cells **2402** to quickly, accurately, and efficiently perform automated operation **2434** at each of multiple locations along different portions of assembly **304** concurrently.

In some illustrative examples, robotic devices **2406** of cell **2404** are supported by platform **2440,** while robotic devices **2408** of cell **2404** are supported by platform **2442.** In these examples robotic devices **2406** and their corresponding end effectors are sized to allow interchangeability of robotic devices **2406.** In other words, robotic devices **2406** may be movable on platform **2440** while platform **2440** remains stationary such that robotic devices **2406** can switch positions on platform **2440** without any assistance from platform **2440.** This interchangeability allows predetermined task sequence **2438** to be quickly, accurately, and efficiently performed.

As used herein, robotic devices are considered interchangeable when one robotic device is swapped out for another robotic device. For example, control system **315** may control robotic devices **2408** such that when robotic device **2416** has performed its individualized, specialized task at location A on assembly **304** and is moved to location B, robotic device **2418** is moved into location A to perform its individualized, specialized task. Similarly, when robotic device **2416** has performed its individualized, specialized task at location B and is moved to location C, and when robotic device **2418** has performed its individualized, specialized task at location A and is moved to location B, robotic device **2420** is moved to location A to perform its individualized, specialized task. In this manner, robotic devices **2408** are interchangeable at locations **2436** such that automated operation **2434** may be performed according to predetermined task sequence **2438.**

In these examples robotic devices **2408** and their corresponding end effectors are sized to allow interchangeability of robotic devices **2408.** In other words, robotic devices **2408** may be movable on platform **2442** while platform **2442** remains stationary such that robotic devices **2408** can switch positions on platform **2442** without any assistance from platform **2442.** This interchangeability allows predetermined task sequence **2438** to be performed quickly, accurately, and efficiently.

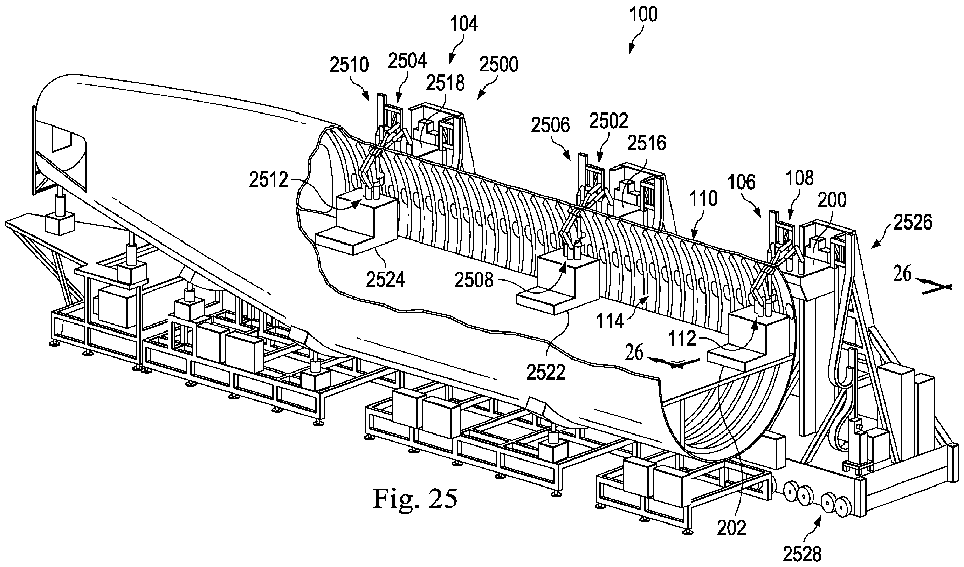

**Figure 25** is an illustration of another perspective view of manufacturing environment **100** from **Figure 1** in accordance with an example embodiment. Plurality of assembly systems **104** may also be referred to as a plurality of cells **2500.** In other words, each of plurality of assembly systems **104** may be an example of one implementation for cell **2404** in **Figure 24****.**

As previously described, plurality of assembly systems **104** is positioned relative to fuselage assembly **102.** Plurality of assembly systems **104** includes assembly system **106,** assembly system **2502,** and assembly system **2504,** each of which may be referred to as a cell.

As discussed above, assembly system **106** includes robotic devices **108** positioned relative to exterior **110** of fuselage assembly **102** (*e.g.,* to perform tasks along the outer mold line side of fuselage assembly **102**) and robotic devices **112** positioned relative to interior **114** (*e.g.,* to perform tasks along the inner mold line side of fuselage assembly **102**) of fuselage assembly **102.** Robotic devices **108** and robotic devices **112** work together to perform automated fastener installation operations for the building of fuselage assembly **102.** Robotic devices **108** are examples of implementations of robotic devices **2408** in **Figure 24** and robotic devices **112** are examples of implementations of robotic devices **2406** in **Figure 24****.**

Further, assembly system **2502** includes robotic devices **2506** positioned relative to interior **114** of fuselage assembly **102** and robotic devices **2508** positioned relative to exterior **110** of fuselage assembly **102.** Robotic devices **2506** and robotic devices **2508** work together to perform automated fastener installation operations. Robotic devices **2506** and robotic devices **2508** are examples of implementations of robotic devices **2406** and robotic devices **2408,** respectively, in **Figure 24****.**

Assembly system **2504** includes robotic devices **2510** positioned relative to interior **114** of fuselage assembly **102** and robotic devices **2512** positioned relative to exterior **110** of fuselage assembly **102.** Robotic devices **2510** and robotic devices **2512** work together to perform automated fastener installation operations. Each of these robotic devices performs a different, specialized task specific to interior **114** or exterior **110** of fuselage assembly **102.** Robotic devices **2510** and robotic devices **2512** are examples of implementations of robotic devices **2406** and robotic devices **2408,** respectively, in **Figure 24****.** Each of robotic devices **2510** and robotic devices **2512** is coupled with a single function end effector.

Robotic devices **112,** robotic devices **2506,** and robotic devices **2510** are supported by platform **202,** platform **2516,** and platform **2518,** respectively. In some illustrative examples, examples, these platforms are movable platforms. As one illustrative example, each of platform **202,** platform **2516,** and platform **2518** may be integrated with or otherwise coupled (directly or indirectly) to a corresponding movable device, such as an automated guided vehicle (AGV).

In one illustrative example, platform **202** includes, is part of, or is coupled to a movement system (not shown in this view) that allows platform **202** to be moved along an interior of fuselage assembly **102.** For example, platform **202** may be moved along a floor inside fuselage assembly **102** to thereby move robotic devices **112** relative to fuselage assembly **102.**

Further, robotic devices **108,** robotic devices **2508,** and robotic devices **2512** are supported by platform **200,** platform **2522,** and platform **2524,** respectively. In some illustrative examples, examples, these platforms are movable platforms. As one illustrative example, each of platform **200,** platform **2522,** and platform **2524** may be integrated with or otherwise coupled to a corresponding movable device, such as an automated guided vehicle (AGV).

In some examples, platform **200,** platform **2522,** and platform **2524** are integrated with or coupled to towers, which may be mobile towers. As one illustrative example, robotic devices **108** are supported by platform **200,** which Is coupled to tower **2526.** Platform **200** is movable in a vertical direction along tower **2526** (*e.g.,* up and down tower **2526**). Further, tower **2526** includes, is part of, or is coupled to automated guided vehicle **2528,** which allows platform **200,** and thereby robotic devices **108,** to be positioned along a length of fuselage assembly **102.**

Because each of the robotic devices in plurality of assembly systems **104** is coupled to a single function end effector, multiple robotic devices may be supported on a platform and moved around the platform in a precise and efficient manner for performing operations on fuselage assembly **102.** In particular, each of the robotic devices in plurality of assembly systems **104** performs its specialized task according to a predetermined task sequence.

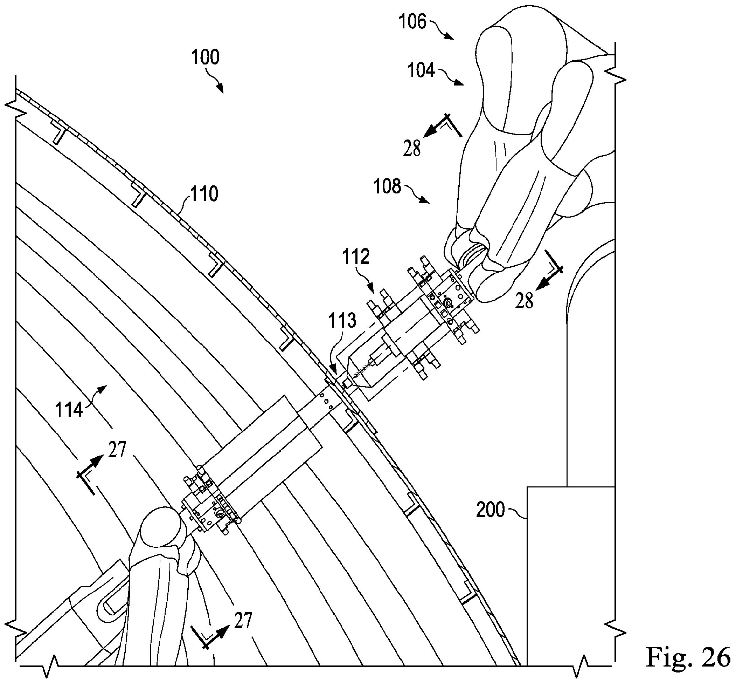

**Figure 26** is an illustration of an enlarged end view of fuselage assembly **102** being built in accordance with an example embodiment. This enlarged end view is illustrated from the view of lines **26-26** in **Figure 25****.** Robotic devices **108** and robotic devices **112** work together to install fasteners that join fuselage panels together to build fuselage assembly **102.**

In this illustrative example, robotic devices **108** are coupled with single function end effectors for performing drilling, inspection, and fastener insertion tasks. These single function end effectors may be switched out by being moved around relative to, for example, fastener installation point **113** to perform their individual tasks. As previously described, a single function end effector is an end effector used to perform a single function per robotic device per fastener installation point. In this manner, multiple single function end effectors may be controlled and coordinated to perform individualized, specialized tasks in a predetermined sequence. Accordingly, an automated operation comprised of multiple such specialized tasks may be performed by these single function end effectors working in a coordinated, serial manner.

In some cases, each of robotic devices **108** are moved around on platform 200 in order to position its corresponding end effector for a particular task relative to fastener installation point **113.** In other cases, robotic devices **108** may remain stationary on platform **200** but may be used to move and position their end effectors relative to a next location in order to position the proper end effector for a given task relative to fastener installation point **113.**

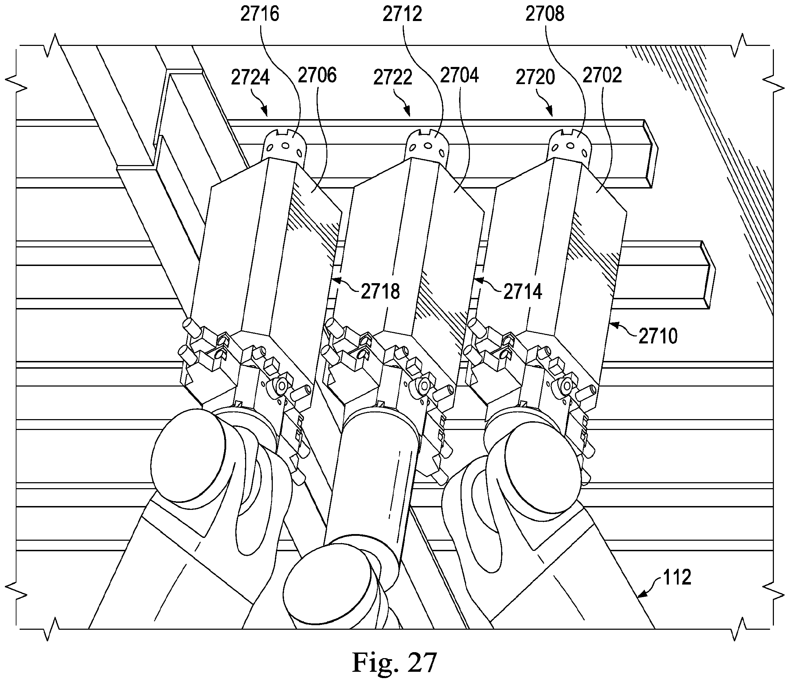

**Figure 27** is an illustration of an enlarged perspective view of end effectors **2700** coupled to robotic devices **112** from **Figures 25-26** in accordance with an example embodiment. This view of end effectors **2700** is depicted with respect to arrow **27-27** shown in **Figure 26****.** End effectors **2700** include end effector **2702,** end effector **2704,** and end effector **2706.** End effector **2702,** end effector **2704,** and end effector **2706** are examples of implementations for end effector **2422,** end effector **2424,** and end effector **2426,** respectively.

Further, each of end effector **2702,** end effector **2704,** and end effector **2706** may be implemented in a manner similar to end effector **324** described in **Figure 3** and end effector **414** described in **Figures 4-15****.** In this illustrative example, end effector **2702** includes nozzle **2708** and suction device **2710.** End effector **2704** includes nozzle **2712** and suction device **2714.** End effector **2706** includes nozzle **2716** and suction device **2718.**

End effector **2702,** end effector **2704,** and end effector **2706** are used to provide a single-sided clamp-up from interior **114** of fuselage assembly **102** which allows robotic devices **108** in **Figures 25-26** to facilitate the performing of multiple tasks at multiple locations concurrently such that fastener installation operations are performed as these multiple locations in a serial manner. In particular, robotic devices **2408** may be moved around on platform **200** in **Figures 25-26** and interchanged to perform various tasks simultaneously at multiple fastener installation points but according to a predetermined task sequence.

End effectors **2700** may each include a sensor system for use in guiding each end effector to a particular fastener installation point. The sensor system may include at least one of, for example, a laser distance sensor, an imaging device, or some other type of sensor.

As depicted, end effectors **2702, 2704,** and **2706** are positioned relative to fastener installation points **2720, 2722,** and **2724,** respectively. In this illustrative example, these fastener installation points are close together. The positioning of end effectors **2702, 2704,** and **2706** so close to each other, which allows end effectors **2702, 2704,** and **2706** to be positioned relative to fastener installation points **2720, 2722,** and **2724,** respectively, may be referred to as a high-density setup.

In some illustrative examples, these fastener installation points at which different tasks are concurrently being performed may be adjacent to each other. In other examples, one or more locations may be present between the fastener installation points at which different tasks are concurrently being performed.

The size and shape of these end effectors allows them to be positioned in this high-density setup and allows easy and efficient interchangeability of robotic devices **108** on platform **200.** In other words, robotic devices **108** may be easily and quickly moved around on platform **200** to switch up the positioning of end effectors **2702, 2704,** and **2706** relative to fastener installation points **2720, 2722,** and **2724,** respectively.

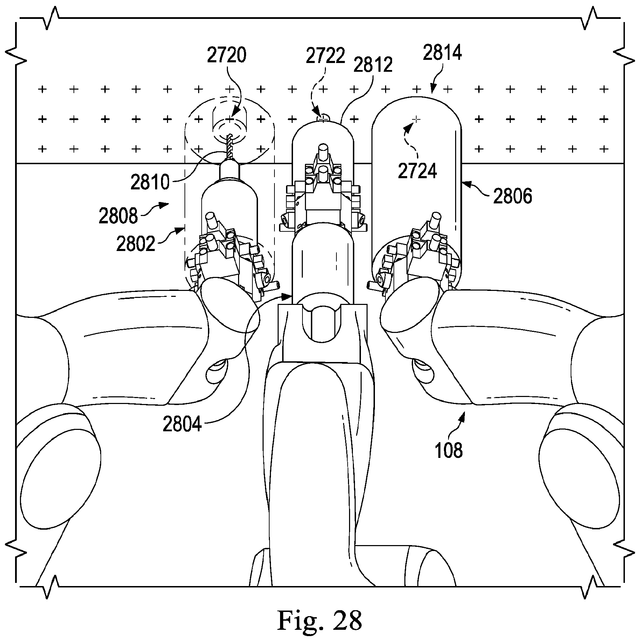

**Figure 28** is an illustration of an enlarged perspective view of end effectors 2800 coupled to robotic devices **108** from **Figures 25-26** in accordance with an example embodiment. This view of end effectors **2800** is depicted with respect to arrow **28-28** in **Figure 26****.** End effectors **2800** include end effector **2802,** end effector **2804,** and end effector **2806.** End effectors **2802, 2804,** and **2806** are positioned along exterior **110** of fuselage assembly **102** opposite of end effectors **2702, 2704,** and **2706,** respectively. End effector **2802,** end effector **2804,** and end effector **2806** are examples of implementations for end effector **2428,** end effector **2430,** and end effector **2432,** respectively.

End effector **2802** may be implemented in a manner similar to end effector 326 in **Figure 3** and end effector **416** in **Figures 4-9****.** For example, end effector **2802** includes tool **2808** and drilling tool **2810,** which may be implemented similarly to tool **424** and drilling tool **426,** respectively, of end effector **416** in **Figures 4-9****.**

End effector **2804** includes inspection device **2812.** Inspection device **2812** may be used to inspect, for example, a hole that was drilled using drilling tool **426** of end effector **2802.** Inspection device **2812** ensures that the drilled hole meets hole tolerances and requirements for fastener installation. Hole tolerances and requirements may define a quality of the hole. For example, inspection device **2812** may be used to inspect at least one of a hole diameter, a roundness of the hole, an angle of the hole relative to the surface, a countersink depth, a countersink size, a countersink angle, or some other type of hole feature.

Inspection device **2812** may take a number of different forms. For example, without limitation, inspection device **2812** may include at least one of a laser sensor, an imaging device, or some other type of sensor.

End effector **2806** may be implemented in a manner similar to end effector **328** described in **Figure 3** and end effector **1100** described in **Figures 11-13****.** For example, end effector **2806** includes fastener insertion tool **2814,** which may be implemented similarly to fastener insertion tool **1104** in **Figures 11-13****.**

End effectors **2800** may each include a sensor system for use in guiding each end effector to a particular fastener installation point. The sensor system may include at least one of, for example, a laser distance sensor, an imaging device, or some other type of sensor.

As depicted, end effectors **2802, 2804,** and **2806** are positioned relative to fastener installation points **2720, 2722,** and **2724,** respectively. In this illustrative example, these fastener installation points are close together but spaced apart *(e.g.,* non-adjacent). For example, fastener installation points **2720, 2722,** and **2724** are spaced apart by three fastener installation points. This type of spacing may be used to ensure that end effectors **2802, 2804,** and **2806** do not collide. The positioning of end effectors **2802, 2804,** and **2806** so close to each other such that end effectors **2802, 2804,** and **2806** are positioned relative to fastener installation points **2816, 2818,** and **2820,** respectively, may be referred to as a high-density setup. This type of setup allows multiple different, specialized tasks to be performed concurrently. The size and shape of these end effectors allows them to be positioned in this high-density setup and allows easy and efficient interchangeability of robotic devices **108** on platform **200.** In other words, robotic devices **108** may be easily and quickly moved around on platform **200** to switch up the positioning of end effectors **2802, 2804,** and **2806** relative to the multiple fastener installation points, to thereby switch up the functions being performed at the fastener installation points.

Each of robotic devices **112** is coupled with an end effector that is used to hold together the fuselage panels from the interior side of fuselage assembly **102** during the switching out of the single function end effectors coupled to robotic devices **108.** In other words, each of robotic devices **112** includes a single function end effector that provides a single-sided clamp-up. For example, after the end effector on one of robotic devices **108** has been used to perform its designated task, that end effector may be moved away from fastener installation point **113** (*e.g.,* to another installation point) to make room for a different end effector. An end effector coupled to one of robotic devices **112** is used to maintain the clamp-up of the fuselage panels from only the interior side of fuselage assembly **102,** while the end effectors of robotic devices **108** are being switched around and used efficiently within a high-density robotic zone at exterior **110** of fuselage assembly **102.**

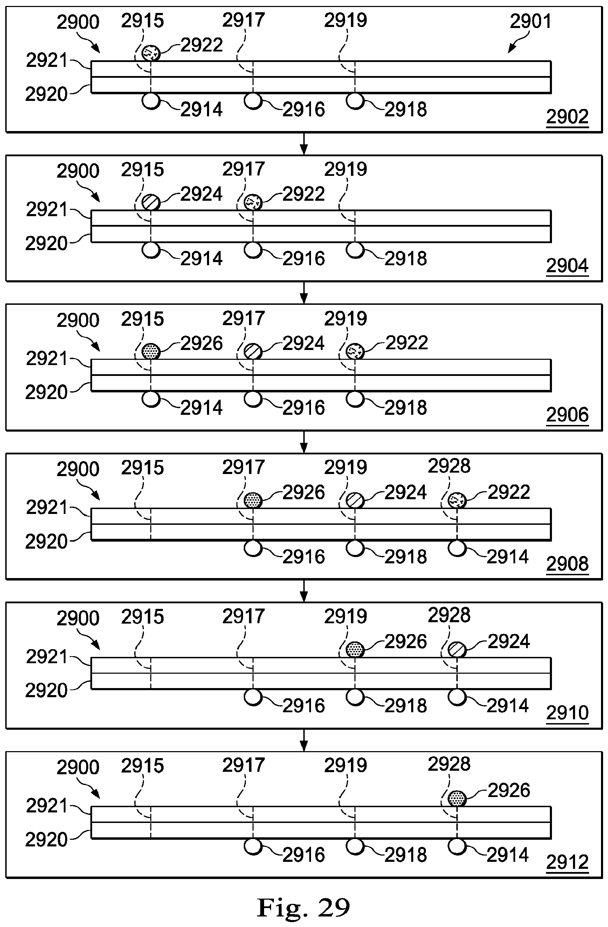

**Figure 29** is a representational sequence diagram of the various stages involved in a cell performing automated fastener installation operations at multiple fastener installation points along an assembly in accordance with an example embodiment. Cell **2900** is an example of one implementation for cell **2404** in **Figure 24****.** Cell **2900** is used to perform the automated fastener installation operations on joint **2901.** In particular, cell **2900** is used to perform these automated fastener installation operations according to a predetermined task sequence, such as predetermined task sequence **2438** in **Figure 24****.**

Joint **2901** may also be referred to as an assembly, a lap splice, a fuselage splice, or some other type of skin splice, depending on the implementation. In one illustrative example, joint **2901** includes two parts mated together. In some examples, these parts may be panels, such as fuselage panels or wing panels.

Cell **2900** is used to install fasteners along joint **2901** according to a predetermined task sequence that includes first stage **2902,** second stage **2904,** third stage **2906,** fourth stage **2908,** fifth stage **2910,** and sixth stage **2912.** The number and order of these stages is an example of only one implementation of the predetermined task sequence that may be performed using cell **2900.**

Cell **2900** includes end effector **2914,** end effector **2916,** and end effector **2918,** which are coupled to robotic devices (not shown) at first side **2920** of joint **2901.** End effectors **2914, 2916,** and **2918** may be implemented similarly to end effectors **2422, 2424,** and **2426,** respectively, from **Figure 24****.** Further, cell **2900** includes drilling end effector **2922,** which is coupled to a robotic device (not shown) at second side **2921** of joint **2901.** Drilling end effector **2922** may be implemented similarly to end effector **2428** from **Figure 24****.**

Cell **2900** is used to perform automated fastener installation operations at fastener installation points **2915, 2917,** and **2919.** These fastener installation points may be adjacent fastener installation points as shown, without any other fastener installation points between them. Alternatively, one or more other fastener installation points may be present between fastener installation point **2915** and fastener installation point **2917,** fastener installation point **2917** and fastener installation point **2919,** or both. This type of spacing apart of fastener installation points is similar to that shown in **Figure 28****.**

As further described below, the various end effectors of cell **2900** are moved and positioned relative to these different fastener installation points by moving the robotic devices to which these end effectors are coupled. Further, in some illustrative examples, the operations and movement of the end effectors and robotic devices as described below are controlled by a control system, such as control system **315** in **Figures 3** and **24****.**

At first stage **2902,** end effector **2914,** end effector **2916,** and end effector **2918** are positioned relative to fastener installation point **2915,** fastener installation point **2917,** and fastener installation point **2919,** respectively. Further, drilling end effector **2922** is moved and positioned relative to fastener installation point **2915** for use in performing a specialized task at fastener installation point **2915.**

In this illustrative example, at first stage **2902,** end effector **2914** is aligned with drilling end effector **2922.** Further, at first stage **2902,** end effector **2914** and drilling end effector **2922** are used to establish a clamp-up of joint **2901** at fastener installation point **2915** and to drill a hole at fastener installation point **2915.** These tasks may be performed in any of the number of ways described above.

In one illustrative example, end effector **2914** and drilling end effector **2922** first establish a clamp-up of joint **2901.** Drilling end effector **2922** then drills a hole at fastener installation point **2915.** Once the hole has been drilled, end effector **2914** then establishes a single-sided clamp-up using any of the number of methods described above. For example, end effector **2914** may use suctioning to establish and maintain the single-sided clamp-up. In other words, once the single-sided clamp-up has been established, end effector **2914** is able to maintain this clamp-up of joint **2901** at fastener installation point **2915** without further assistance from drilling end effector **2922.**

At second stage **2904,** drilling end effector **2922** is swapped out for inspection end effector **2924,** while end effector **2914** maintains the clamp-up at fastener installation point **2915.** As one illustrative example, at second stage **2904,** drilling end effector **2922** is moved away from fastener installation point **2915** and positioned relative to fastener installation point **2917.**

As previously described, fastener installation point **2917** may be adjacent to fastener installation point **2915** without any other fastener installation points in between them. Alternatively, fastener installation point **2917** and fastener installation point **2915** may be non-adjacent (i.e. having one or more other fastener installation points between them). In this manner, drilling end effector **2922** may be configured to skip over one or more fastener installation points to reach fastener installation point **2917.** For example, drilling end effector **2922** may be controlled to only drill holes at every second, every third, every fourth, or every n^{th} fastener installation point. In some cases, the fastener installation points may be in different horizontal rows along joint **2901.**

Further, at second stage **2904,** inspection end effector **2924** is moved and positioned relative to fastener installation point **2915** to perform a next specialized task at fastener installation point **2915.** Inspection end effector **2924** is used to inspect the hole drilled at fastener installation point **2915,** while end effector **2914** maintains the clamp-up at fastener installation point **2915.** Concurrently, end effector **2916** and drilling end effector **2922** establish a clamp-up at fastener installation point **2917.** Further, drilling end effector **2922** drills a hole at fastener installation point **2917.** Once the hole is drilled, end effector **2916** is used to establish and independently maintain a single-sided clamp-up of joint **2901** at fastener installation point **2917.** This single-sided clamp-up allows drilling end effector **2922** to be swapped out for inspection end effector **2924** at fastener installation point **2917** in the next stage.

At third stage **2906,** drilling end effector **2922** is moved away from fastener installation point **2917** and positioned relative to fastener installation point **2919;** inspection end effector **2924** is moved and positioned relative to fastener installation point **2917** to perform a next specialized task at fastener installation point **2917;** and fastener insertion end effector **2926** is moved and positioned relative to fastener installation point **2915** to perform a next specialized task at fastener installation point **2915.**

Fastener insertion end effector **2926** is used to install a fastener at fastener installation point **2915.** In some illustrative examples, fastener insertion end effector **2926** is able to install the fastener on its own. For example, installing the fastener may include inserting a fastener within the hole drilled at fastener installation point **2915** until a desired interference fit is formed. In other examples, fastener insertion end effector **2926** is used to insert a fastener in the hole drilled at fastener installation point **2915,** while end effector **2914** is used to complete installation of the fastener. End effector **2914** maintains the clamp-up at fastener installation point **2915** until the fastener has been fully installed at fastener installation point **2915,** after which, end effector **2914** is no longer needed to maintain the clamp-up at fastener installation point **2915.**

Concurrently with the installation of the fastener at fastener installation point **2915,** inspection end effector **2924** inspects the hole drilled at fastener installation point **2917.** Further, concurrently with the installation of the fastener at fastener installation point **2915** and the inspection of the hole at fastener installation point **2917,** end effector **2918** and drilling end effector **2922** are used to establish a clamp-up at fastener installation point **2919.** Further, drilling end effector **2922** drills a hole at fastener installation point **2919.** Once the hole is drilled, end effector **2918** is used to establish and maintain a single-sided clamp-up of joint **2901** at fastener installation point **2919.** This single-sided clamp-up allows drilling end effector **2922** to be swapped out for inspection end effector **2924** at fastener installation point **2919** at the next stage.

At fourth stage **2908,** drilling end effector **2922** is moved and positioned relative to a new fastener installation point **2928;** inspection end effector **2924** is moved and positioned relative to fastener installation point **2919;** and fastener insertion end effector **2926** is moved and positioned relative to fastener installation point **2917.** Further, end effector **2914** is moved and positioned relative to fastener installation point 2928.

At fourth stage **2908,** end effector **2914** and drilling end effector **2922** establish a clamp-up at fastener installation point **2928.** Drilling end effector **2922** drills a hole at fastener installation point **2928.** End effector **2914** then establishes and maintains a single-sided clamp-up at fastener installation point **2928.** Concurrently with the tasks being performed by end effector **2914** and drilling end effector **2922,** inspection end effector **2924** inspects the hole drilled at fastener installation point **2919,** while fastener insertion end effector **2926** installs a fastener in the hole drilled at fastener installation point **2917.** Once the fastener has been installed at fastener installation point **2917,** end effector **2918** is no longer needed to maintain the clamp-up at fastener installation point **2917.**

In this illustrative example, fastener installation point **2928** may be the final location along joint **2901** at which a fastener is to be installed. However, in other illustrative examples, any other number of fastener installation points may be present between fastener installation point **2917** and fastener installation point **2928** or after fastener installation point **2928.**

At fifth stage **2910,** drilling end effector **2922** is moved away from joint **2901;** inspection end effector **2924** is moved and positioned relative to fastener installation point **2928;** and fastener insertion end effector **2926** is moved and positioned relative to fastener installation point **2919.**

Inspection end effector **2924** inspects the hole drilled at fastener installation point **2928,** while fastener insertion end effector **2926** concurrently installs a fastener at fastener installation point **2919.** Once the fastener has been installed at fastener installation point **2919,** end effector **2918** is no longer needed to maintain the clamp-up at fastener installation point **2919.**

In other illustrative examples, joint **2901** may include many other locations after fastener installation point **2928** at which fasteners are to be installed. In these examples, drilling end effector **2922** would only move away from joint **2901** after it has been used to drill holes at each of these locations.

For example, any number of other stages may be present between fourth stage **2908** and fifth stage **2910.** Drilling end effector **2922,** inspection end effector **2924,** and fastener insertion end effector **2426** may continue moving in the serial manner shown to perform concurrent tasks at other fastener installation points.

At sixth sage **2912,** inspection end effector **2924** is moved away from joint **2901** and fastener insertion end effector **2926** is moved and positioned relative to fastener installation point **2928.** Fastener insertion end effector **2926** installs a fastener at fastener installation point **2928.** Once the fastener has been installed at fastener installation point **2928,** end effector **2914** is no longer needed to maintain the clamp-up at fastener installation point **2928.**

In this manner, the installation of fasteners at fastener installation points **2915, 2916, 2918,** and **2928** may be automated by cell **2900.** Cell **2900** quickly, accurately, and efficiently performs these automated fastener installation operations because of the interchangeability of the end effectors of cell **2900.**

As described above via the various stages illustrated in **Figure 29****,** cell **2900** is used to perform different tasks (*e.g.*, drilling, inspection, fastener insertion and installation) of a fastener installation operation at multiple locations concurrently, while still ensuring that the tasks are performed at any given fastener installation point in the proper sequence for the fastener installation operation. Cell **2900** is a high-density robotic cell that allows different tasks of a fastener installation operation to be performed in a small volumetric space.

In these illustrative examples, the interchanging of the various end effectors is tailored to meet selected takt time and production requirements. In other words, the moving and re-positioning of end effectors may be controlled and timed based on the selected takt time and production requirements. Further, the movement of these end effectors via the robotic devices to which they are coupled may be controlled and coordinated by the control system (*e.g.*, control system **315** in **Figures 3** and **24**) to prevent collisions of the end effectors or robotic devices during movement.

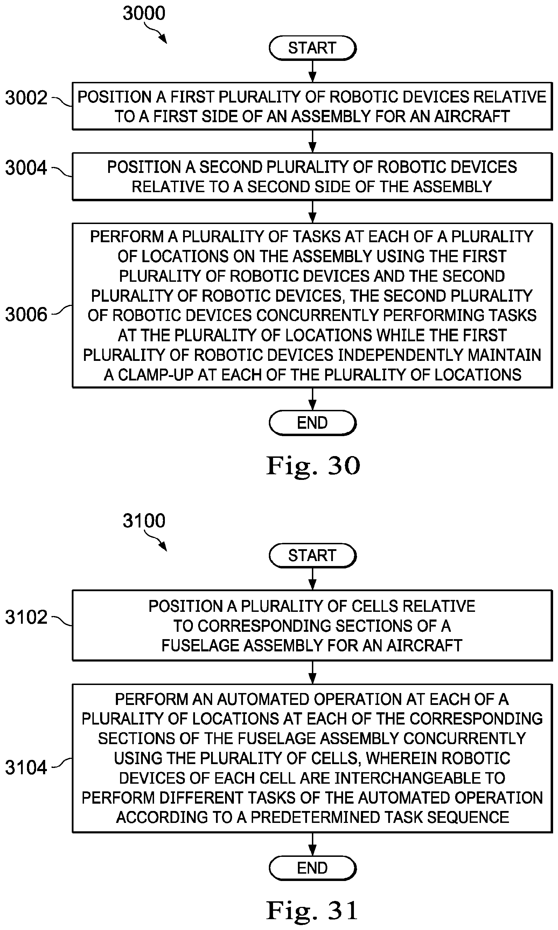

**Figure 30** is a flowchart of a process for performing automated operations for an assembly in accordance with an example embodiment. Process **3000** illustrated in **Figure 30** may be performed using, for example, a cell, such as cell **2404** described in **Figure 24****.** Process **3000** is a fully automated process.

Process **3000** may begin by positioning a first plurality of robotic devices relative to a first side of an assembly for an aircraft (operation **3002**). In operation **3002,** the first plurality of robotic devices may be, for example, robotic devices **2406** in **Figure 24****.** In one illustrative example, the assembly is a fuselage assembly and the first area is a first volumetric area located within the interior of the fuselage assembly.

Next, a second plurality of robotic devices is positioned relative to a second side of the assembly (operation **3004**). In operation **3004,** the second plurality of robotic devices may be, for example, robotic devices **2408** in **Figure 24****.** In one illustrative example, the second area is a second volumetric area located at the exterior of the fuselage assembly. Further, each of the second plurality of robotic devices is used to perform a corresponding task.

A plurality of tasks is performed at each of a plurality of locations on the assembly using the first plurality of robotic devices and the second plurality of robotic devices, the second plurality of robotic devices concurrently performing tasks at the plurality of locations while the first plurality of robotic devices independently maintain a clamp-up at each of the plurality of locations (operation **3006**), with the process terminating thereafter. In operation **3006,** the plurality of tasks are automated tasks. In these illustrative examples, the plurality of tasks includes a drilling task, an inspection task *(e.g.,* a hole inspection task), and a fastener installation task.

**Figure 31** is a flowchart of a process for performing automated operations to build a fuselage assembly for an aircraft in accordance with an example embodiment. Process **3100** illustrated in **Figure 31** may be performed using, for example, high-density robotic system **2400** described in **Figure 24****.** In particular, process **3100** is performed using plurality of cells **2402** of high-density robotic system **2400** in **Figure 24****.** Process **3100** is a fully automated process.
Process **3100** begins by positioning a plurality of cells relative to corresponding sections of a fuselage assembly for an aircraft (operation **3102**). In operation **3102,** the plurality of cells is a plurality of robotic cells. Each of the plurality of cells includes a first plurality of robotic devices positioned relative to an interior of the fuselage assembly and a second plurality of robotic devices positioned relative to an exterior of the fuselage assembly.

Thereafter, an automated operation is performed at each of a plurality of locations at each of the corresponding sections of the fuselage assembly concurrently using the plurality of cells, wherein robotic devices of each cell are interchangeable to perform different tasks of the automated operation according to a predetermined task sequence (operation **3104**), with the process terminating thereafter. This type of coordinated operation of the plurality of cells and the robotic devices within each cell of the plurality of cells ensures efficiency and improved overall production times.

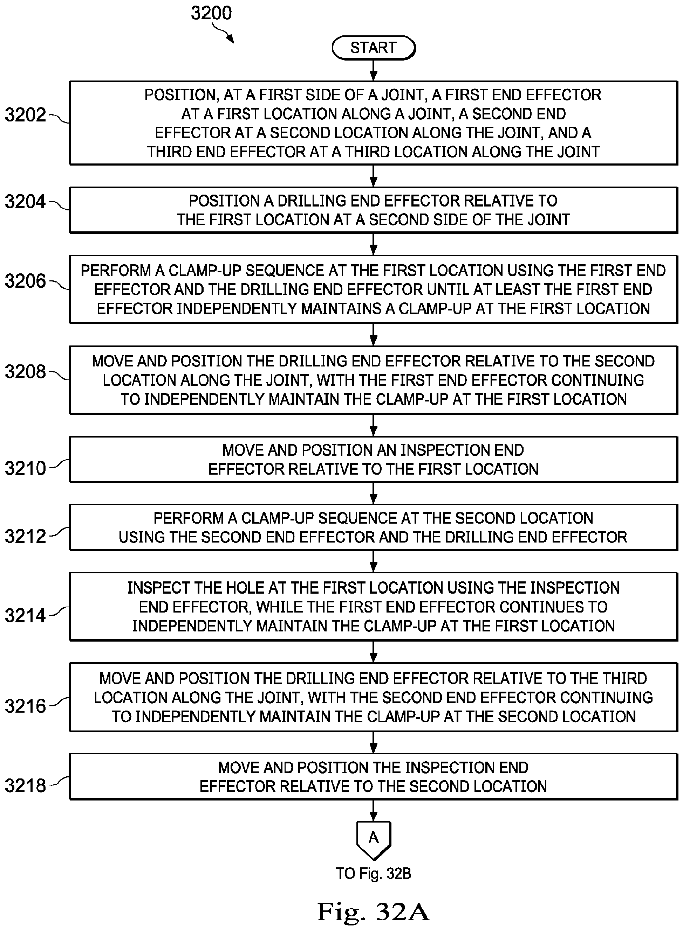

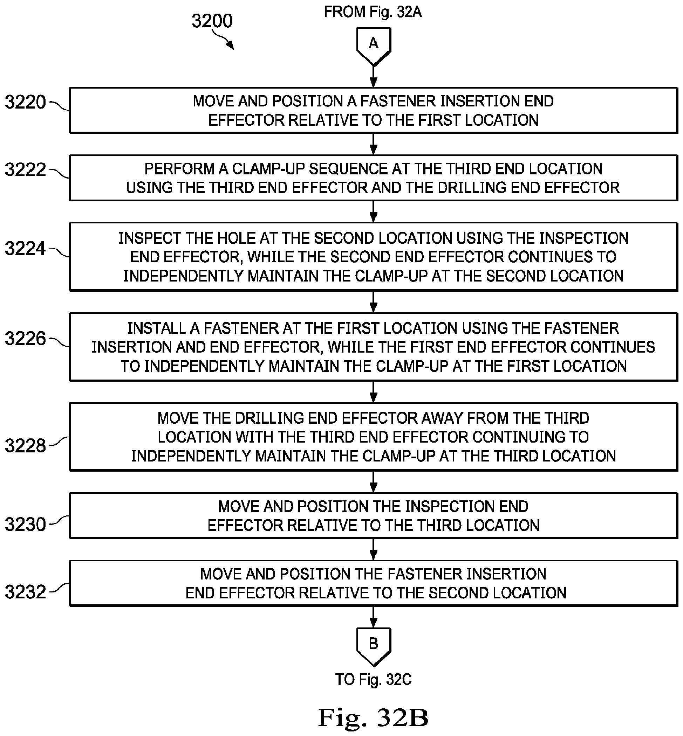

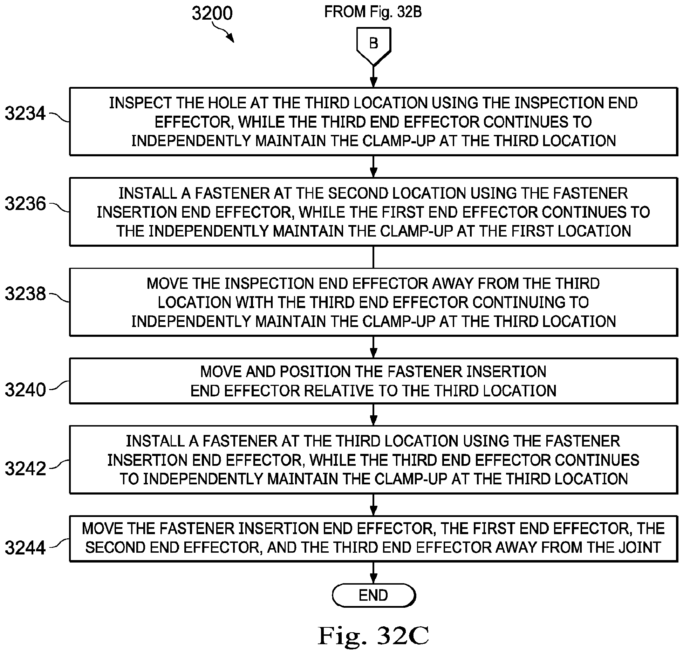

**Figure 32** is a flowchart of a process for performing automated fastener installation operations along a joint in accordance with an example embodiment. Process **3200** illustrated in **Figure 32** may be performed using, for example, a cell, such as cell **2404** described in **Figure 24****.** Process **3200** is a fully automated process. Further, process **3200** is an example of one way in which multiple automated operations, such as automated operation **2434,** may be performed according to predetermined task sequence **2438** described in **Figure 24****.**

Process **3200** begins by positioning, at a first side of a joint, a first end effector at a first location along a joint, a second end effector at a second location along the joint, and a third end effector at a third location along the joint (operation **3202**). The joint includes a first part and a second part, which may be, for example, skin panels. For example, the joint may be a lap splice comprised of fuselage or wing skin panels. In one example, the joint includes a first panel that forms a first side of the joint and a second panel that forms a second side of the joint. The first location is a first fastener installation point.

In these illustrative examples, operation **3202** includes generally aligning a nozzle of the first end effector with the first location. For example, the nozzle may be aligned with respect to an axis extending through the joint at the first location.

In one illustrative example, the first end effector, the second end effector, and the third end effector are positioned at the first location, the second location, and the third location, respectively, at the same time. In other illustrative examples, operation **3202** may be performed in stages during process **3200.** For example, the first end effector may be positioned at the first location before operation **3204,** but the second end effector may be positioned at the second location during operation **3208** or operation **3210** described further below or between these two operations. Similarly, in some cases, the third end effector may be positioned at the third location during operation **3218** or operation **3220** described further below or between these two operations.

Thereafter, a drilling end effector is positioned relative to the first location at a second side of the joint (operation **3204**). In these illustrative examples, operation **3204** includes generally aligning a tool of the drilling end effector with the first location. For example, the tool may be aligned with respect to the axis extending through the joint at the first location.

Next, a clamp-up sequence is performed at the first location using the first end effector and the drilling end effector until at least the first end effector independently maintains a clamp-up at the first location (operation **3206**). Operations **1602-1608** in **Figure 16** are an example of one manner in which a clamp-up sequence, such as the clamp-up sequence in operation **3206,** may be performed. Operations **1602-1608** may be used to implement operation **3206** when a hole (*e.g.,* a fastener hole or a through-hole) needs to be drilled at the first location in order to install a fastener at the first location.

For example, the first end effector may be used to apply the first mechanical force in operation **1602** as well as perform the suctioning in operation **1606.** Further, the drilling end effector may be used to apply the second mechanical force in operation **1602** as well as perform the drilling task in operation **1604.** With respect to operation **1602,** the first and second mechanical forces are equal and opposite mechanical forces.

Operations **1702-1704** are an example of another way in which the clamp-up sequence may be performed. For example, the first end effector may be used to apply the first mechanical force in operation **1702** as well as perform the suctioning in operation **1704.** The drilling end effector may be used to apply the second mechanical force in operation **1702.**

Operations **1702-1704** may be used to implement operation **3206** when determinate assembly holes are already present in the first panel and the second panel of the joint. Aligning the holes in these two panels with forms a through-hole extending through the joint and within which a fastener can be installed.

In these illustrative examples, at the end of the clamp-up sequence of operation **3206,** a single-sided clamp-up is provided at the first location. This single-sided clamp-up is independently maintained by the first end effector. Providing the single-sided clamp-up may be performed in a number of different ways. For example, providing a single-sided clamp-up may include performing operations similar to **1606** and **1608** in **Figure 16****,** operations **1704** and **1706** in **Figure 17****,** operation **1804** in **Figure 18****,** operations **1902** and **1904** in **Figure 19****,** operations **2004** and **2006** in **Figure 20****,** operations **2102, 2104,** and **2106** in **Figure 21****,** operations **2202** and **2204** in **Figure 22****,** or operation **2304** in **Figure 23****.**

Thereafter, the drilling end effector is moved and positioned relative to the second location along the joint, with the first end effector continuing to independently maintain the clamp-up at the first location (operation **3208**). An inspection end effector is then moved and positioned relative to the first location (operation **3210**).

A clamp-up sequence is performed at the second location using the second end effector and the drilling end effector (operation **3212**). Operations **1602-1608** in **Figure 16** are an example of one manner in which a clamp-up sequence, such as the clamp-up sequence in operation **3212,** may be performed. For example, the second end effector may be used to apply the first mechanical force in operation **1602** as well as perform the suctioning in operation **1606.** Further, the drilling end effector may be used to apply the second mechanical force in operation **1602** as well as perform the drilling task in operation **1604.**

Operations **1702-1704** are an example of another way in which the clamp-up sequence may be performed. For example, the second end effector may be used to apply the first mechanical force in operation **1702** as well as perform the suctioning in operation **1704.** The drilling end effector may be used to apply the second mechanical force in operation **1702.**

In these illustrative examples, at the end of the clamp-up sequence of operation **3212,** a single-sided clamp-up is provided at the first location. This single-sided clamp-up is independently maintained by the first end effector. As previously described, the single-sided clamp-up may be provided in a number of different ways.

The hole at the first location is inspected using the inspection end effector, while the first end effector continues to independently maintain the clamp-up at the first location (operation **3214**). In these illustrative examples, operation **3212** and operation **3214** are performed concurrently.

The drilling end effector is then moved and positioned relative to the third location along the joint, with the second end effector continuing to independently maintain the clamp-up at the second location (operation **3216**). The inspection end effector is then moved and positioned relative to the second location (operation **3218**). Further, a fastener insertion end effector is moved and positioned relative to the first location (operation **3220**).

A clamp-up sequence is performed at the third location using the third end effector and the drilling end effector (operation **3222**). Operations **1602-1608** in **Figure 16** are an example of one manner in which a clamp-up sequence, such as the clamp-up sequence in operation **3222,** may be performed. For example, the third end effector may be used to apply the first mechanical force in operation **1602** as well as perform the suctioning in operation **1606.** Further, the drilling end effector may be used to apply the second mechanical force in operation **1602** as well as perform the drilling task in operation **1604.**

Operations **1702-1704** are an example of another way in which the clamp-up sequence may be performed. For example, the third end effector may be used to apply the first mechanical force in operation **1702** as well as perform the suctioning in operation **1704.** The drilling end effector may be used to apply the second mechanical force in operation **1702.**

In these illustrative examples, at the end of the clamp-up sequence of operation **3222,** a single-sided clamp-up is provided at the first location. This single-sided clamp-up is independently maintained by the first end effector. As previously described, the single-sided clamp-up may be provided in a number of different ways.

The hole at the second location is inspected using the inspection end effector, while the second end effector continues to independently maintain the clamp-up at the second location (operation **3224**). A fastener is installed at the first location using the fastener insertion end effector, while the first end effector continues to independently maintain the clamp-up at the first location (operation **3226**). In these illustrative examples, operations **3222, 3224,** and **3226** are performed concurrently.

Thereafter, the drilling end effector is moved away from the third location with the third end effector continuing to independently maintain the clamp-up at the third location (operation **3228**). The inspection end effector is moved and positioned relative to the third location (operation **3230**). The fastener insertion end effector is moved and positioned relative to the second location (operation **3232**).

The hole at the third location is inspected using the inspection end effector, while the third end effector continues to independently maintain the clamp-up at the third location (operation **3234**). A fastener is installed at the second location using the fastener insertion end effector, while the first end effector continues to independently maintain the clamp-up at the first location (operation **3236**). In these illustrative examples, operations **3234** and **3236** are performed concurrently.

Thereafter, the inspection end effector is moved away from the third location with the third end effector continuing to independently maintain the clamp-up at the third location (operation **3238**). The fastener insertion end effector is moved and positioned relative to the third location (operation **3240**). A fastener is installed at the third location using the fastener insertion end effector, while the third end effector continues to independently maintain the clamp-up at the third location (operation **3242**).

The fastener insertion end effector, the first end effector, the second end effector, and the third end effector are moved away from the joint (operation **3244**), with the process terminating thereafter. Although these end effectors are described as being moved away in operation **3244,** one or more of these end effectors may be moved at various times during the overall process **3200.**

For example, the first end effector may be moved away from the first location after the fastener is installed at the first location. The second end effector may be moved away from the second location after the fastener is installed at the second location. Further, the third end effector and the fastener insertion end effector may both be moved away from the third location after the third fastener has been installed at the third location.

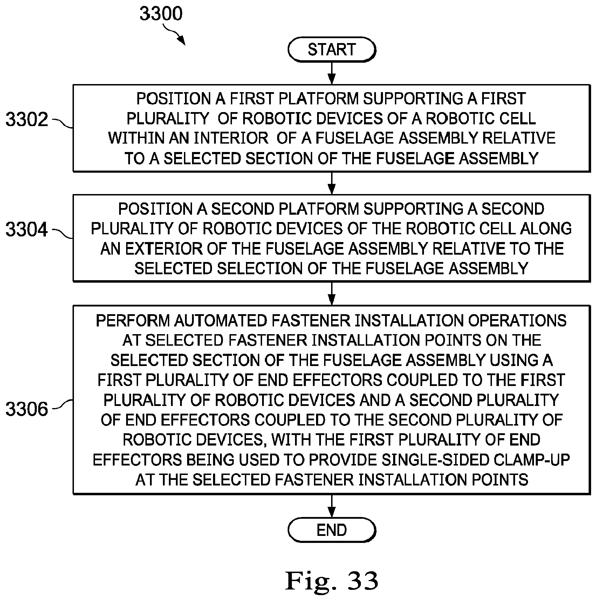

**Figure 33** is a flowchart of a process for performing automated fastener installation operations along a fuselage assembly for an aircraft in accordance with an example embodiment. Process **3300** illustrated in **Figure 33** may be performed using, for example, a cell, such as cell **2404** described in **Figure 24****.** Process **3300** is a fully automated process.

Process **3300** begins by positioning a first platform supporting a first plurality of robotic devices of a robotic cell within an interior of a fuselage assembly relative to a selected section of the fuselage assembly (operation **3302**). Next, a second platform supporting a second plurality of robotic devices of the robotic cell is positioned along an exterior of the fuselage assembly relative to the selected section of the fuselage assembly (operation **3304**). In operations **3302** and **3304,** the first and second platforms are positioned to provide coordinated operation of the first plurality of robotic devices and the second plurality of robotic devices.

Operations **3302** and **3304** may be performed in a number of different ways. In one illustrative example, each of the first platform and the second platform is directly or indirectly coupled to a mobile device, such as an automated guided vehicle. The mobile device is able to move the first platform and the second platform relative to the fuselage assembly.

In another illustrative example, the first platform and the second platform are stationary. In this example, the fuselage assembly may be supported by a mobile support system, which may include one or more automated guided vehicles, that is used to move the fuselage assembly relative to the first and second platforms.

Thereafter, automated fastener installation operations are performed at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points (operation **3306**), with the process terminating thereafter. Operation **3308** includes tailoring interchanging of the second plurality of robotic devices, and thereby the second plurality of end effectors, to meet selected takt time and production requirements.

The single-sided clamp-up provided by the first plurality of end effectors enables the second plurality of robotic devices, and thereby the second plurality of end effectors, to be moved around the second platform and switched out at the various fastener installation points. Movement of the second plurality of robotic devices may be coordinated based on the time needed to perform the tasks that are performed concurrently.

The "takt" time for a stage or phase is the time interval within which any one or more of the tasks are to be performed alone or concurrently. The "takt" time may be selected, for example, based on the task having the longest duration. In one illustrative example, drilling a hole takes about 4 seconds; inspection of the hole takes about 15 seconds; and installing a fastener in the hole may take about 5 seconds. Thus, the "takt time" for this stage or phase may be selected as 20 seconds. In other words, coordinate movement and swapping of the second plurality of robotic devices is set to occur every 20 seconds.

Although process **3300** is described with respect to a single robotic cell. Process **3300** may be repeated any number of additional times using different robotic cells positioned relative to different sections of the fuselage assembly. As one illustrative example, three different instances of process **3300** may be performed by three different robotic cells concurrently. In this manner, the overall time and resources needed to perform fastener installation operations at the desired fastener installation points along fuselage assembly is greatly reduced.

The robotic cells (i.e. high-density robotic cells) form a high-density robotic system that improves overall efficiency, simplifies the fastener installation process, and reduces the overall production time for building the fuselage assembly. The high-density robotic system streamlines the various tasks involved in fastener installation and provides a high-efficiency continuous-flow production system. The continuous flow is maintained by the movement of at least one of the first platform relative to the fuselage assembly, the second platform relative to the fuselage assembly, or the fuselage assembly relative to at least one of the first or second platforms.

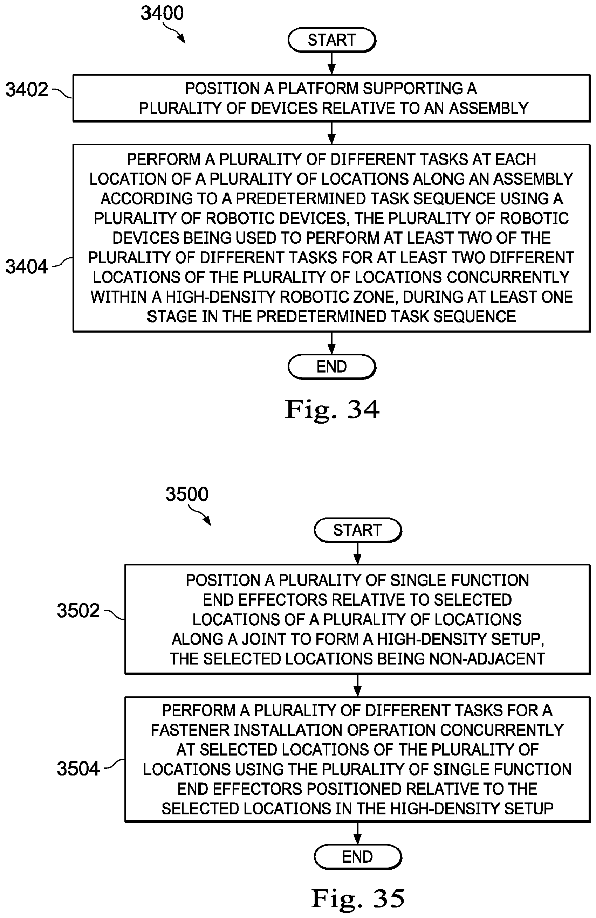

**Figure 34** is a flowchart of a process for performing automated operations using a high-density robotic cell in accordance with an example embodiment. Process **3400** illustrated in **Figure 34** may be performed using, for example, a cell, such as cell **2404** described in **Figure 24****.** Process **3400** is a fully automated process.

Process **3400** includes positioning a platform supporting a plurality of devices relative to an assembly (operation **3402**). In operation **3402,** the assembly may be a fuselage assembly, such as fuselage assembly **313** in **Figure 3****.** Process **3400** further includes performing a plurality of different tasks at each location of a plurality of locations along an assembly according to a predetermined task sequence using a plurality of robotic devices, the plurality of robotic devices being used to perform at least two of the plurality of different tasks for at least two different locations of the plurality of locations concurrently within a high-density robotic zone, during at least one stage in the predetermined task sequence (operation **3404**).

**Figure 35** is a flowchart of a process for installing fasteners at a plurality of locations along a joint in accordance with an example embodiment. Process **3500** illustrated in **Figure 35** may be performed using, for example, a cell, such as cell **2404** described in **Figure 24****.** Process **3500** is a fully automated process.

Process **3500** includes positioning a plurality of single function end effectors relative to selected locations of a plurality of locations along a joint to form a high-density setup, the selected locations being non-adjacent (operation **3502**). The plurality of locations may be locations at which fasteners are to be installed. These locations may be referred to as fastener installation points. Two locations that are non-adjacent means that one or more other locations may be present between these two locations. In other illustrative examples, two non-adjacent locations are locations that are not horizontally adjacent. For example, the two non-adjacent locations may be on different rows. In some cases, the two non-adjacent locations may be vertically aligned but on different rows.

Process **3500** further includes performing a plurality of different tasks for a fastener installation operation concurrently at selected locations of the plurality of locations using the plurality of single function end effectors positioned relative to the selected locations in the high-density setup (operation **3504**). The plurality of different tasks may include for example, without limitation, a drilling task and an inspection task; an inspection task and a fastener insertion task; or a drilling task, an inspection task, and a fastener insertion task. In some illustrative examples, a task may be performing a clamp-up sequence using two single function end effectors *(e.g.,* a drilling end effector and an end effector with a nozzle and suction device).

**Figure 36** is a flowchart of a process for providing multiple single-sided clamp-ups in accordance with an example embodiment. Process **3600** illustrated in **Figure 36** may be performed using, for example, a cell, such as cell **2404** described in **Figure 24****.** Process **3600** is a fully automated process.

Process **3600** includes establishing a two-sided clamp-up at a first fastener installation point using a first robotic device at a first side of a joint and a second robotic device at a second side of the joint (operation **3602**). Next, the two-sided clamp-up at the first fastener installation point is converted to a single-sided clamp-up using the first robotic device (operation **3604**). The second robotic device is then moved along the second side of the joint to a second fastener installation point, while maintaining the single-sided clamp-up at the first fastener installation point using only the first robotic device (operation **3606**). Thereafter, a third robotic device is moved along the second side of the joint to the first fastener installation point, while maintaining the single-sided clamp-up at the first fastener installation point using only the first robotic device (operation **3608**).

Another two-sided clamp-up is then established at the second fastener installation point using a fourth robotic device at the first side of the joint and the second robotic device at the second side of the joint (operation **3610**). The two-sided clamp-up at the second fastener installation point is converted to single-sided clamp-up using the fourth robotic device (operation **3612**).

Thus, in this manner, process **3600** illustrates how multiple single-sided clamp-ups may be established in a serial manner. By providing the single-sided clamp-ups in this manner, the various tasks involved in fastener installation may be also automated in a serial manner.

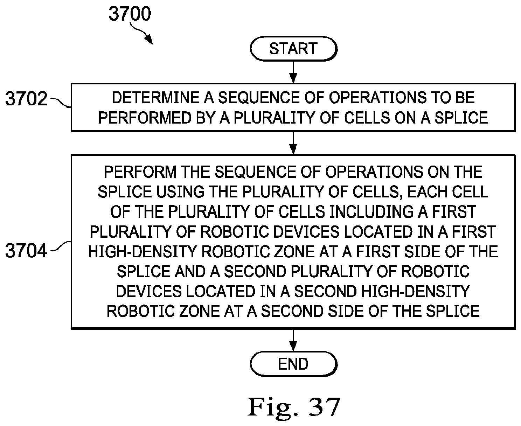

**Figure 37** is a flowchart of a process for providing multiple single-sided clamp-ups in accordance with an example embodiment. Process **3700** illustrated in **Figure 36** may be performed using, for example, a high-density robotic system, such as high-density robotic system **2400** in **Figure 24****,** which comprises cells **2402.** Process **3700** is a fully automated process.

Process **3700** includes determining a sequence of operations to be performed by a plurality of cells on a splice (operation **3702**). The sequence of operations is performed on the splice using the plurality of cells, each cell of the plurality of cells including a first plurality of robotic devices located in a first high-density robotic zone at a first side of the splice and a second plurality of robotic devices located in a second high-density robotic zone at a second side of the splice (operation **3704),** with the process terminating thereafter.

Operation **3702** may be performed in different ways. In one illustrative example, the sequence for each of the plurality of cells is determined such that one cell is used to perform a fastener installation operation at every n^{th} location along a length of a structure (e.g., across all of the plurality of high-density robotic zones or areas). Another cell may then be determined for use in performing a fastener installation operation at every m^{th} location along the length of the structure to thereby "fill in" the locations not worked on by the first cell. Depending on the implementation, "m" and "n" may be the same or different.

For example, operation **3707** includes a first cell beginning fastener installation operations at a first location along the splice at one stage in the sequence and a second cell beginning fastener installation operations at a second location along the spice after a period of time has passed at another stage in the sequence. The first location and the second location may be different such that the second cell begins filling in the locations skipped by the first cell after the first cell has moved to a different stage in the sequence of operations.

In other illustrative examples, each cell is selected for performing all of the fastener installation operations needed for a corresponding high-density robotic zone or area. In this manner, each cell is designated for a specific corresponding high-density robotic zone area around the splice. In one illustrative example, the first plurality of robotic devices and the second plurality of robotic devices of a first cell in the plurality of cells perform all fastener installation operations for one section along the splice and the first plurality of robotic devices and the second plurality of robotic devices of a second cell in the plurality of cells perform all fastener installation operations for a different section along the splice. Each section along the splice may be associated with two corresponding high-density robotic zones, one of either side of the section.

Using process **3700,** fasteners may be installed using the plurality of cells according to any number of different types of sequences based on efficiency. For example, the determination in operation **3702** may result in multiple cells operating simultaneously within a single high-density robotic area around the splice. In other cases, each cell may be designated to perform all of the operations needed in a given high-density robotic area around the splice. In still other cases, the plurality of cells may be used together in a coordinated manner to perform the different operations needed along the entire length of the splice.

Turning now to **Figure 38****,** an illustration of a data processing system in the form of a block diagram is depicted in accordance with an example embodiment. Data processing system **3800** may be used to implement control system **315** in **Figure 3****.** As depicted, data processing system **3800** includes communications framework **3802,** which provides communications between processor unit **3804,** storage devices **3806,** communications unit **3808,** input/output unit **3810,** and display **3812.** In some cases, communications framework **3802** may be implemented as a bus system.

Processor unit **3804** is configured to execute instructions for software to perform a number of operations. Processor unit **3804** may comprise a number of processors, a multi-processor core, and/or some other type of processor, depending on the implementation. In some cases, processor unit **3804** may take the form of a hardware unit, such as a circuit system, an application specific integrated circuit (ASIC), a programmable logic device, or some other suitable type of hardware unit.

Instructions for the operating system, applications, and/or programs run by processor unit **3804** may be located in storage devices **3806.** Storage devices **3806** may be in communication with processor unit **3804** through communications framework **3802.** As used herein, a storage device, also referred to as a computer readable storage device, is any piece of hardware capable of storing information on a temporary and/or permanent basis. This information may include, but is not limited to, data, program code, and/or other information.

Memory **3814** and persistent storage **3816** are examples of storage devices **3806.** Memory **3814** may take the form of, for example, a random-access memory or some type of volatile or non-volatile storage device. Persistent storage **3816** may comprise any number of components or devices. For example, persistent storage **3816** may comprise a hard drive, a flash memory, a rewritable optical disk, a rewritable magnetic tape, or some combination of the above. The media used by persistent storage 3816 may or may not be removable.

Communications unit **3808** allows data processing system **3800** to communicate with other data processing systems and/or devices. Communications unit **3808** may provide communications using physical and/or wireless communications links.

Input/output unit **3810** allows input to be received from and output to be sent to other devices connected to data processing system **3800.** For example, input/output unit **3810** may allow user input to be received through a keyboard, a mouse, and/or some other type of input device. As another example, input/output unit **3810** may allow output to be sent to a printer connected to data processing system **3800.**

Display **3812** is configured to display information to a user. Display **3812** may comprise, for example, without limitation, a monitor, a touch screen, a laser display, a holographic display, a virtual display device, and/or some other type of display device.

In this illustrative example, the processes of the different example embodiments may be performed by processor unit **3804** using computer-implemented instructions. These instructions may be referred to as program code, computer usable program code, or computer readable program code and may be read and executed by one or more processors in processor unit **3804.**

In these examples, program code **3818** is located in a functional form on computer readable media **3820,** which is selectively removable, and may be loaded onto or transferred to data processing system **3800** for execution by processor unit **3804.** Program code **3818** and computer readable media **3820** together form computer program product **3822.** In this illustrative example, computer readable media **3820** may be computer readable storage media **3824** or computer readable signal media **3826.**

Computer readable storage media **3824** is a physical or tangible storage device used to store program code **3818** rather than a medium that propagates or transmits program code **3818.** Computer readable storage media **3824** may be, for example, without limitation, an optical or magnetic disk or a persistent storage device that is connected to data processing system **3800.**

Alternatively, program code **3818** may be transferred to data processing system **3800** using computer readable signal media **3826.** Computer readable signal media **3826** may be, for example, a propagated data signal containing program code **3818.** This data signal may be an electromagnetic signal, an optical signal, and/or some other type of signal that can be transmitted over physical and/or wireless communications links.

The illustration of data processing system **3800** in **Figure 38** is not meant to provide architectural limitations to the manner in which the example embodiments may be implemented. The different example embodiments may be implemented in a data processing system that includes components in addition to or in place of those illustrated for data processing system **3800.** Further, components shown in **Figure 38** may be varied from the illustrative examples shown.

Example embodiments of the disclosure may be described in the context of aircraft manufacturing and service method **3900** as shown in **Figure 39** and aircraft **4000** as shown in **Figure 40****.** Turning first to **Figure 39****,** an illustration of an aircraft manufacturing and service method is depicted in accordance with an example embodiment. During pre-production, aircraft manufacturing and service method **3900** may include specification and design **3902** of aircraft **4000** in **Figure 40** and material procurement **3904.**

During production, component and subassembly manufacturing **3906** and system integration **3908** of aircraft **4000** in **Figure 40** takes place. Thereafter, aircraft **4000** in **Figure 40** may go through certification and delivery **3910** in order to be placed in service **3912.** While in service **3912** by a customer, aircraft **4000** in **Figure 40** is scheduled for routine maintenance and service **3914,** which may include modification, reconfiguration, refurbishment, and other maintenance or service.

Each of the processes of aircraft manufacturing and service method **3900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 40****,** an illustration of an aircraft is depicted in which an example embodiment may be implemented. In this example, aircraft **4000** is produced by aircraft manufacturing and service method **3900** in **Figure 39** and may include airframe **4002** with plurality of systems **4004** and interior **4006.** Examples of systems **4004** include one or more of propulsion system **4008,** electrical system **4010,** hydraulic system **4012,** and environmental system **4014.** Any number of other systems may be included. Although an aerospace example is shown, different example embodiments may be applied to other industries, such as the automotive industry.

Apparatuses and methods embodied herein may be employed during at least one of the stages of aircraft manufacturing and service method **3900** in **Figure 39****.** In particular, assembly **304** from **Figure 3** or fuselage assembly **102** from **Figure 1** may be manufactured during any one of the stages of aircraft manufacturing and service method **3900.** For example, without limitation, assembly system **302** from **Figure 3** or assembly system **413** from **Figure 4** may be used to join parts of assembly **304** from **Figure 3** or lap splice **400** from **Figure 4****,** respectively, during at least one of component and subassembly manufacturing **3906,** system integration **3908,** routine maintenance and service **3914,** or some other stage of aircraft manufacturing and service method **3900.** Further, assembly **304** or lap splice **400** may be used to form at least one of airframe **4002** or interior **4006** of aircraft **4000.**

Still further, high-density robotic system **2400** of **Figure 24** or any one of plurality of cells **2402** described in **Figure 24** may be used to perform automated fastener installation operations during any one of the stages of aircraft manufacturing and service method **3900.** For example, high-density robotic system **2400** of **Figure 24** or any one of plurality of cells **2402** described in **Figure 24** may be used during at least one of component and subassembly manufacturing **3906,** system integration **3908,** routine maintenance and service **3914,** or some other stage of aircraft manufacturing and service method **3900.** Additionally, these automated fastener installation operations may be performed to build at least one of airframe **4002** or interior **4006** of aircraft **4000.**

In one illustrative example, components or subassemblies produced in component and subassembly manufacturing **3906** in **Figure 39** may be fabricated or manufactured in a manner similar to components or subassemblies produced while aircraft **4000** is in service **3912** in **Figure 39****.** As yet another example, one or more apparatus embodiments, method embodiments, or a combination thereof may be utilized during production stages, such as component and subassembly manufacturing **3906** and system integration **3908** in **Figure 39****.** One or more apparatus embodiments, method embodiments, or a combination thereof may be utilized while aircraft **4000** is in service **3912** and/or during maintenance and service **3914** in **Figure 39****.** The use of a number of the different example embodiments may substantially expedite the assembly of and/or reduce the cost of aircraft **4000.**

Thus, the example embodiments provide a method and apparatus for easily and efficiently performing automated fastener installation operations. The example embodiments describe single function end effectors that provide a single-sided (one-sided) clamp-up solution to maintain the clamping of parts while other single function end effectors are being swapped out on the opposite side.

Using single function end effectors that perform distinct, specialized tasks may provide for smaller, lighter, and less complex end effectors. The simplicity of these single function end effectors may improve the efficiency, reliability, and maintenance demands of these end effectors and may reduce the overall size of the supporting robotic devices to which these end effectors are coupled.

With these types of single function end effectors and the methods and apparatuses described in the different example embodiments, multiple automated operations, such as automated fastener installation operations, may be performed quickly and efficiently. In particular, overall production times may be reduced. The example embodiments described provide time and cost savings, while also greatly reducing the complexity of the overall process needed for performing hundreds to thousands of fastener installation operations accurately.

In one example embodiment, a method for performing a fastener installation is provided. A first mechanical force is applied to a first part and a second mechanical force is applied to a second part to form a clamp-up of the first part and the second part. Air is suctioned through a fastener hole, which is formed by a first hole in the first part that is aligned with a second hole in the second part, to pull the second part towards the first part and thereby maintain the clamp-up of the first part and the second part.

In still yet another example embodiment, a method is provided for aligning a first hole in a first panel with a second hole in a second panel to define a through-hole. A wall that defines the second hole is gripped from within the through-hole to pull the second panel towards the first panel and thereby establish a clamp-up of the first panel and the second panel.

In another example embodiment, a method for maintaining a clamp-up is provided. A first mechanical force and a second mechanical force are applied to a first part and a second part, respectively, to form the clamp-up. The first part forms a first side of the clamp-up and the second part forms a second side of the clamp-up. Air is suctioned, from the first side of the clamp-up, through a fastener hole that extends through the first part and the second part to pull the second part towards the first part. The first mechanical force and the second mechanical force are removed simultaneously while continuing to suction such that the suctioning independently maintains the clamp-up after removal of the first mechanical force and the second mechanical force.

In another example embodiment, a method is provided for maintaining a clamp-up. Air is suctioned from a first side of a clamp-up of a first part and a second part through a fastener hole formed by a first hole in the first part and a second hole in the second part to pull the second part towards the first part and thereby provide the clamp-up of the first part and the second part.

In yet another example embodiment, a method for maintaining a clamp-up is provided. A first end effector at a first side of a panel joint applies a first force via contact with the first side of a panel joint. A second end effector at a second side of the panel joint applies a second force that is equal and opposite to the first force via contact with the second side of the panel joint to establish the clamp-up. The first end effector at the first side of the panel joint maintains the clamp-up after the second end effector is removed from contact with the second side.

In still yet another example embodiment, a method for a single-sided clamp-up is provided. A single function end effector positioned at a first side of a panel joint applies a first force to a first panel of the panel joint. The single function end effector applies a second force that is equal and opposite to the first force to a second panel of the panel joint to thereby provide the single-sided clamp-up of the first panel and the second panel.

In another example embodiment, a method of providing a clamp-up is provided. The method includes reaching through a first hole in a first part to grip a wall that defines a second hole in a second part to thereby pull the second part against the first part.

In an example embodiment, an apparatus for maintaining a clamp-up comprises a nozzle and a suction device. The nozzle has a nozzle diameter greater than a hole diameter of a first hole in a first part. The nozzle is used to apply a first mechanical force to a first side of the clamp-up when engaged with the first part. The suction device is for suctioning air, from the first side of the clamp-up, through a fastener hole formed by the first hole in the first part and a second hole in a second part and through the nozzle. The air is suctioned with a volumetric flow rate sufficient to maintain the clamp-up of the first part and the second part from the first side without requiring an additional force at a second side of the clamp-up.

In another example embodiment, an apparatus for forming a clamp-up comprises an end effector. The end effector is positioned at a first side of a panel joint and applies a first clamp-up force to a first panel of a panel joint and an equal and opposite second clamp-up force to a second panel of the panel joint to provide the clamp-up.

In another example embodiment, an apparatus for forming a clamp-up comprises a first clamp-up end effector on a first side of a panel joint; a second clamp-up end effector on a second side of a panel joint; and a through-hole clamping apparatus incorporated into the first clamp-up end effector. The first clamp-up end effector is in communication with the second clamp-up end effector.

In one example embodiment, a method for performing automated tasks for an assembly is provided. A first plurality of robotic devices is positioned relative to a first side of the assembly. A second plurality of robotic devices is positioned relative to a second side of the assembly, each of the second plurality of robotic devices being used to perform a corresponding task. A plurality of tasks is performed at each of a plurality of locations on the assembly using the first plurality of robotic devices and the second plurality of robotic devices. The second plurality of robotic devices concurrently perform tasks at the plurality of locations while the first plurality of robotic devices independently maintain a clamp-up at each of the plurality of locations.

In another example embodiment, a method is provided for building a fuselage assembly of an aircraft. A plurality of cells is positioned relative to corresponding sections of the fuselage assembly, each of the plurality of cells comprising a first plurality of robotic devices positioned relative to a first side of the fuselage assembly; and a second plurality of robotic devices positioned relative to a second side of the fuselage assembly. An automated operation is performed at each of a plurality of locations at each of the corresponding sections of the fuselage assembly concurrently using the plurality of cells, wherein robotic devices of each cell are interchangeable to perform different tasks of the automated operation according to a predetermined task sequence.

In yet another example embodiment, an apparatus comprises a first plurality of robotic devices; a second plurality of robotic devices; and a control system. Each of the second plurality of robotic devices is coupled to a single function end effector. The control system controls the second plurality of robotic devices to concurrently perform tasks at a plurality of locations on an assembly, while the first plurality of robotic devices independently maintain a clamp-up at each of the plurality of locations.

In another example embodiment, a high-density robotic system comprises a first plurality of robotic devices; a second plurality of robotic devices; a first platform; and a second platform. Each of the first plurality of robotic devices is capable of providing a single-sided clamp-up. The second plurality of robotic devices includes a first robotic device coupled to a drilling end effector; a second robotic device coupled to an inspection end effector; and a third robotic device coupled to a fastener insertion end effector. The first platform supports the first plurality of robotic devices, the first platform being sized to fit and move within an interior of a fuselage assembly. The second platform supports the second plurality of robotic devices, the second platform being sized for positioning and movement along an exterior of the fuselage assembly.

In another example embodiment, a method is provided for performing automated fastener installation operations along a fuselage assembly for an aircraft. A first platform supporting a first plurality of robotic devices of a robotic cell is positioned within an interior of a fuselage assembly relative to a selected section of the fuselage assembly. A second platform supporting a second plurality of robotic devices of the robotic cell is positioned along an exterior of the fuselage assembly relative to the selected section of the fuselage assembly. Automated fastener installation operations are performed at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points.

In another example embodiment, a method is provided for performing automated operations using a high-density robotic cell. A plurality of different tasks is performed at each location of a plurality of locations along an assembly according to a predetermined task sequence using a plurality of robotic devices. The plurality of robotic devices is used to perform at least two of the plurality of different tasks for at least two different locations of the plurality of locations concurrently within a high-density robotic zone, during at least one stage in the predetermined task sequence.

In another example embodiment, a method is provided for installing fasteners at a plurality of locations along a joint. A plurality of different tasks for a fastener installation operation is performed concurrently at selected locations of the plurality of locations using a plurality of single function end effectors positioned relative to the selected locations in a high-density setup.

In another example embodiment, a method is provided for providing multiple single-sided clamp-ups. A two-sided clamp-up is established at a first fastener installation point using a first robotic device at a first side of a joint and a second robotic device at a second side of the joint. The two-sided clamp-up at the first fastener installation point is converted to a single-sided clamp-up using the first robotic device. The second robotic device is moved along the second side of the joint to a second fastener installation point, while maintaining the single-sided clamp-up at the first fastener installation point. A third robotic device is moved along the second side of the joint to the first fastener installation point, while maintaining the single-sided clamp-up at the first fastener installation point.

In another example embodiment, a method is provided for installing fasteners on a splice. A sequence of operations to be performed by a plurality of cells on the splice is determined. The sequence of operations is performed on the splice using the plurality of cells, each cell of the plurality of cells including a first plurality of robotic devices located in a first high-density robotic zone at a first side of the splice and a second plurality of robotic devices located in a second high-density robotic zone at a second side of the splice.

The flowcharts and block diagrams in the different depicted embodiments illustrate the architecture, functionality, and operation of some possible implementations of apparatuses and methods in an example embodiment. In this regard, each block in the flowcharts or block diagrams may represent a module, a segment, a function, and/or a portion of an operation or step.

In some alternative implementations of an example embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

As used herein, the phrase "at least one of," when used with a list of items, means different combinations of one or more of the listed items may be used and only one of the items in the list may be needed. The item may be a particular object, thing, step, operation, process, or category. In other words, "at least one of' means any combination of items or number of items may be used from the list, but not all of the items in the list may be required. For example, without limitation, "at least one of item A, item B, or item C" or "at least one of item A, item B, and item C" may mean item A; item A and item B; item B; item A, item B, and item C; item B and item C; or item A and C. In some cases, "at least one of item A, item B, or item C" or "at least one of item A, item B, and item C" may mean, but is not limited to, two of item A, one of item B, and ten of item C; four of item B and seven of item C; or some other suitable combination.

The description of the different example embodiments has been presented for purposes of illustration and description, and is not intended to be exhaustive or limited to the embodiments in the form disclosed. Many modifications and variations will be apparent to those of ordinary skill in the art. Further, different example embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for providing multiple single-sided clamp-ups, the method comprising:
establishing a two-sided clamp-up at a first fastener installation point using a first robotic device at a first side of a joint and a second robotic device at a second side of the joint;
converting the two-sided clamp-up at the first fastener installation point to a single-sided clamp-up using the first robotic device;
moving the second robotic device along the second side of the joint to a second fastener installation point, while maintaining the single-sided clamp-up at the first fastener installation point; and
moving a third robotic device along the second side of the joint to the first fastener installation point, while maintaining the single-sided clamp-up at the first fastener installation point.

2. The method of claim 1, further comprising:
establishing the two-sided clamp-up at the second fastener installation point using a fourth robotic device at the first side of the joint and the second robotic device at the second side of the joint; and
converting the two-sided clamp-up at the second fastener installation point to the single-sided clamp-up using the fourth robotic device.

3. The method of claim 1 or 2, further comprising:
moving the second robotic device away from the second fastener installation point, while maintaining the single-sided clamp-up at the second fastener installation point; and
moving the third robotic device along the second side of the joint to the second fastener installation point, while maintaining the single-sided clamp-up at the second fastener installation point.

4. A method for performing automated fastener installation operations along a fuselage assembly for an aircraft, the method comprising:
positioning a first platform supporting a first plurality of robotic devices of a robotic cell within an interior of a fuselage assembly relative to a selected section of the fuselage assembly;
positioning a second platform supporting a second plurality of robotic devices of the robotic cell along an exterior of the fuselage assembly relative to the selected section of the fuselage assembly; and
performing automated fastener installation operations at selected fastener installation points on the selected section of the fuselage assembly using a first plurality of end effectors coupled to the first plurality of robotic devices and a second plurality of end effectors coupled to the second plurality of robotic devices, with the first plurality of end effectors being used to provide single-sided clamp-up at the selected fastener installation points.

5. A high-density robotic system for use in a method according to any of the preceding claims, comprising:
a first plurality of robotic devices, each of the first plurality of robotic devices being capable of providing a single-sided clamp-up;
a second plurality of robotic devices, the second plurality of robotic devices including:
a first robotic device coupled to a drilling end effector;
a second robotic device coupled to an inspection end effector; and
a third robotic device coupled to a fastener insertion end effector;
a first platform that supports the first plurality of robotic devices, the first platform being sized to fit and move within an interior of a fuselage assembly; and
a second platform that supports the second plurality of robotic devices, the second platform being sized for positioning and movement along an exterior of the fuselage assembly.

6. The high-density robotic system of claim 5, wherein the second platform is coupled to an automated guided vehicle to allow the second platform to be moved relative to the exterior of the fuselage assembly.

7. The high-density robotic system of claim 5 or 6 , further comprising:
a control system for controlling the first plurality of robotic devices and the second plurality of robotic devices to perform an automated operation at each of a plurality of locations on the fuselage assembly concurrently and for controlling interchanging of the second plurality of robotic devices to perform different tasks of the automated operation according to a predetermined task sequence.
